**Europäisches Patentamt**

**European Patent Office**

**Office européen des brevets**

(19)

(11) Veröffentlichungsnummer: **0 252 326 B1**

(12) **EUROPÄISCHE PATENTSCHRIFT**

(45) Veröffentlichungstag der Patentschrift: **19.09.90**

(51) Int. Cl.⁵: **G21C 7/16**

(21) Anmeldenummer: **87108480.2**

(22) Anmeldetag: **12.06.87**

(54) **Hydraulischer Steuerstabantrieb für wassergekuehlte Kernreaktoren, insbesondere Heizreaktoren.**

(30) Priorität: **13.06.86 DE 3619988**
**10.09.86 DE 3630814**
**29.04.87 DE 3714313**
**04.06.87 DE 3718754**

(43) Veröffentlichungstag der Anmeldung:
**13.01.88 Patentblatt 88/2**

(45) Bekanntmachung des Hinweises auf die Patenterteilung:
**19.09.90 Patentblatt 90/38**

(84) Benannte Vertragsstaaten:
**CH DE FR LI**

(56) Entgegenhaltungen:
**EP-A- 0 031 541**
**EP-A- 0 148 404**
**EP-A- 0 173 767**
**DE-A- 1 900 410**
**DE-A- 3 435 584**

(73) Patentinhaber: **Siemens Aktiengesellschaft,
Wittelsbacherplatz 2, D-8000 München 2(DE)**

(72) Erfinder: **Batheja, Pramod, Dipl.-Ing., Am Dorfweiher 13,
D-8520 Erlangen(DE)**
Erfinder: **Öhrlein, Manred, Riesgasse 3,
D-8706 Höchberg(DE)**
Erfinder: **Rau, Peter, Dipl.-Ing.(FH), Mittelehrenbach
Nr. 89, D-8551 Leutenbach(DE)**
Erfinder: **Weber, Eduard, Dipl.-Phys., Peyerstraat 18,
D-8500 Nürnberg(DE)**

ACTORUM AG

**Beschreibung**

Durch die EP-A 0 148 404 die der DE-A 3 345 099 entspricht - siehe insbesondere deren Fig. 1 bis 3 - ist ein wassergekühlter Kernreaktor, insbesondere in der Ausführung als Heizreaktor, der nach dem Prinzip des internen Naturumlaufes arbeitet, bekannt, mit einem Reaktordruckbehälter und einem darin gelagerten Reaktorkern, bestehend aus einem Brennelementfeld in stehender Anordnung und in Zwischenräume zwischen den Brennelementen ein- und ausfahrbar gelagerten Steuerstäben sowie einer Tragstruktur für Brennelemente und Steuerstäbe und ihrer Antriebe. Aus Fig. 3 der genannten DE-OS ist auch ein hydraulischer Steuerstabantrieb für diesen Reaktor prinzipiell erkennbar, wobei die Steuerstäbe entgegen der Schwerkraft ausfahrbar und in Schwerkraftrichtung einfahrbar sind und Antriebsstangen der Steuerstäbe mit hydraulischen Kolben-ZylinderSystemen versehen sind, welchen von unten das Kühlwasser als Arbeitsfluid (über dort nicht dargestellte reaktorinterne Fluidleitungen) zuführbar ist, wobei das Kühlwasserreservoir als hydraulischer Ablauf dient.

Durch die EP-A 0 173 767 ist es darüber hinaus bekannt, eine reaktor-externe Fluidpumpe vorzusehen, die über Druck- und Saugleitungen und zugehörige Leitungsdurchführungen druckseitig mit den Kolben-Zylinder-Systemen und saugseitig mit dem Kühlwasserreservoir im Reaktordruckbehälter verbunden ist, und ferner mittels einer außen am Reaktordruckbehälter angeordneten Steuerventilanordnung eine Beeinflussung der Fluidmenge auf der Druckseite der Fluidpumpe zwecks Verstellung der Steuerstäbe in Richtung "Heben" oder "Senken" oder aber zum Halten der eingenommenen Steuerstabposition vorzunehmen.

Bei dem bekannten Steuerstabantrieb nach der zuletzt genannten EP-OS erfolgt die Beeinflussung der Fluidmenge auf der Druckseite der Fluidpumpe nicht nur durch die als Pumpen-Bypaß-Ventil ausgebildete Steuerventilanordnung sondern auch und vor allem durch eine Drehzahlverstellung der Fluidpumpe. Durch die Erfindung soll demgegenüber ein gattungsgemäßer hydraulischer Steuerstabantrieb geschaffen werden, mit welchem eine feindosierte Verstellung der Steuerstäbe auch dann möglich ist, wenn die Pumpe als Konstantpumpe in ihrem optimale Drehzahlbereich arbeitet, wobei sowohl die Anordnung der reaktor-externen Fluidpumpe als auch die daran angeschlossene Steuerventil-Anordnung inhärent sicher sein sollen, in dem Sinne, daß bei einer Pumpenstörung ebenso der Betrieb aufrechterhalten werden kann wie bei einer Störung des für den Hebevorgang der Steuerstäbe vorgesehenen Zweiges der Steuerventilanordnung.

Erfindungsgemäß wird die gestellte Aufgabe bei einem hydraulischen Steuerantrieb der im Oberbegriff des Anspruchs 1 definierten Art durch die im Kennzeichen des Anspruchs 1 angegebenen Merkmale gelöst. Vorteilhafte Weiterbildungen sind in den Ansprüchen 2 bis 13 angegeben. Die mit der Erfindung erzielbaren Vorteile sind vor allem darin zu sehen, daß die inhärente Sicherheit der Steuerventilanordnung gegen weiteres Ausfahren oder gegen unerwünschtes Stehenbleiben eines Steuerstabes in der ausgefahrenen Position bei Klemmen eines Hebeventils in seiner Offen-Stellung erheblich gesteigert ist, d.h., die Sicherheit, die ohne Reduzieren der Drehzahl oder Abstellen der Fluidpuumpe bereits gegeben ist, so daß unter Berücksichtigung der Gesamtsicherheit, d.h. der Möglichkeit einer Notabschaltung der Fluidpumpe, eine Fehlbedienung als ausgeschlossen angesprochen werden kann. Die Erfindung ist insbesondere geeignet für Heizreaktoren die nach dem Prinzip des Druckwasserreaktors mit internem Naturumlauf arbeiten, oder aber für schwerwassermoderierte Druckwasserreaktoren (PHWR = Pressure Heavy Water Reactor). Im folgenden werden anhand mehrerer in der Zeichnung dargestellter Ausführungsbeispiele die Erfindung und ihre Vorteile noch näher erläutert. Darin zeigt in schematischer Darstellung:

Fig. 1 einen Heizreaktor mit innerem Druckbehälter und äußerem Sicherheitsbehälter, welcher nach dem Prinzip des internen Naturumlauf-Druckwasserreaktors (INR) arbeitet und welcher mit einem Steuerstabantrieb nach der Erfindung ausgerüstet ist;

Fig. 2 die schaltungsmäßige Einzelheit X der Fluidpumpen-Anordnung nach Fig. 1;

Fig. 3 die schaltungsmäßige Einzelheit Y der Steuerventilanordnung nach Fig. 1, jedoch nur mit einer Steuerzweiganordnung CV, die zur Ansteuerung des Antriebs eines Steuerstabes dient, damit das Grundprinzip anhand dieser vereinfachten Schaltung erkennbar ist;

Fig. 4 ein Impulsdiagramm, bei dem die Signalspannung U in Volt über der Zeit t in Sekunden aufgetragen ist, die man von Stellungsgebern an den Hebeventilen abnehmen kann, wobei der Zeitpunkt $t_a$ den Beginn des Ventil-Öffnungsvorganges und der Zeitpunkt $t_z$ einen normalen Zeitpunkt eines Schließvorganges bedeutet;

Fig. 5 eine mit serieller Redundanz im Hebezweig ausgestattete Steuerventilanordnung, d.h., es sind jeweils zwei Hebeventile in einem Hebezweig zueinander in Reihe geschaltet;

Fig. 6 eine Vereinfachung der Schaltung nach Fig. 5 mit gleichfalls serieller Redundanz, jedoch ist eines der seriellen Hebeventile als Haupt-Hebeventil allen Hebezweigen gemeinsam vorgeschaltet;

Fig. 7 ein Ausführungsbeispiel für eine hydraulische Steuerzweiganordnung entsprechend Fig. 6, jedoch mit einer Dreifach-Reihenschaltung aus vorgeschaltetem Haupt-Hebeventil, Wirbelkammerventil und Nachschalt-Hebeventil im jeweiligen Hebezweig;

Fig. 8 perspektivisch, ein einzelnes Wirbelkammerventil der radialen Bauart zur Erläuterung seiner grundsätzlichen Funktion;

Fig. 9 ein Diagramm, in welchem der Verlauf des Auslaßstrom-Durchsatzes f3(t) des Wirbelkammerventils - Ordinatenachse - in Abhängigkeit von der Zeit t - Abszissenachse - qualitativ aufgetragen ist;

FIG 10 ein weiteres Ausführungsbeispiel einer hydraulischen Steuerzweiganordnung, wobei lediglich die Antriebe für zwei Steuerstäbe dargestellt sind und die Absicherung des jeweiligen Hebezweiges durch ein allen Hebezweigen gemeinsames Wirbelkammerventil bewirkt wird.

FIG 11 eine Variante der hydraulischen Schaltung nach FIG 10, bei welcher die Anordnung der den hydraulischen Vordruck für das Wirbelkammerventil bestimmenden Fluiddrosseln etwas geändert ist;

FIG 12 eine Steuerzweiganordnung mit einem als Wirbeldrossel ausgebildeten Wirbelventil, was einen besonders einfachen Aufbau des Steuerstabantriebs CD3 ermöglicht; und

FIG 13 die Einzelheit XIII aus FIG 12 in perspektivischer Darstellung, stark vereinfacht.

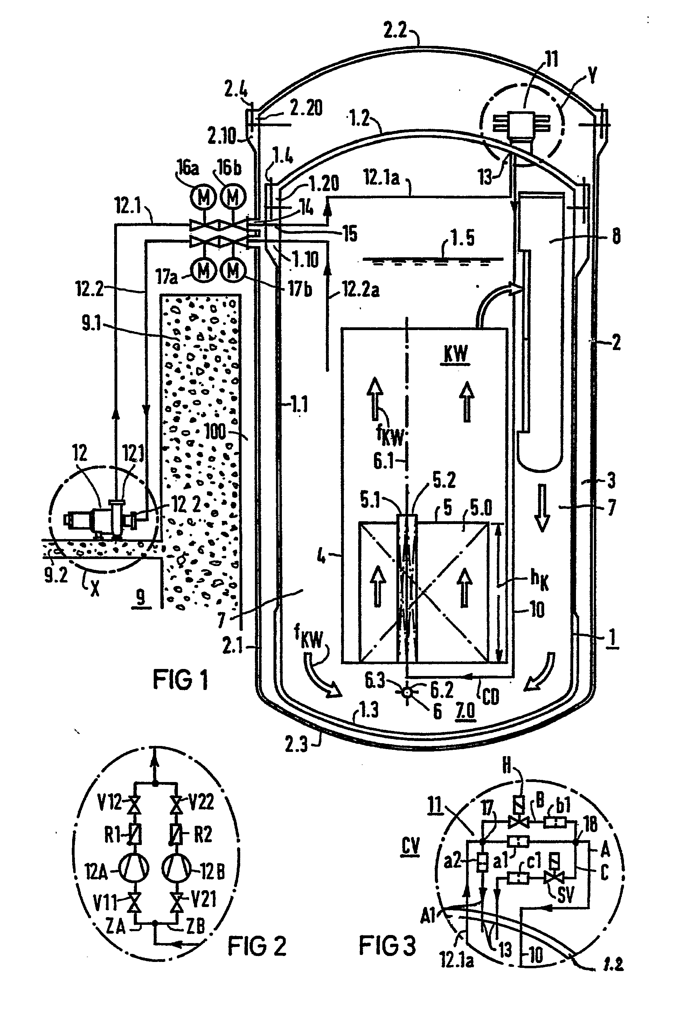

Der in Fig.1 lediglich schematisch dargestellte Heizreaktor weist einen inneren, im wesentlichen zylindrischen Reaktordruck behälter 1 und einen diesen mit Abstandszwischenraum 3 umhüllenden äußeren Sicherheitsbehälter 2 auf. Beide Behälter weisen jeweils einen Behälterunterteil 1.1 bzw. 2.1, einen nach außen kalottenförmig gewölbten Deckel 1.2 bzw. 2.2 und einen nach außen kalottenförmig ausgewölbten Behälterboden 1.3 bzw. 2.3 auf. Behälterunterteil 1.1 bzw. 2.1 und Deckel 1.2 bzw. 2.2 sind jeweils mit in der Wandstärke verstärkten Behälterflanschen 1.10, 2.10 bzw. 1.20, 2.20 versehen, und die Flanschen 1.10 - 1.20 und 2.10 - 2.20 sind jeweils mittels Deckelschrauben 1.4 bzw. 2.4 druckdicht zusammengespannt.

Im Inneren des Druckbehälters 1 sind der zylindrische, unten und oben offene Kernbehälter 4 und in diesem der Reaktorkern 5 an einer nicht dargestellten Tragstruktur gelagert, welcher z.B. so ausgebildet sein kann, wie in der DE-OS 33 45 099 oder der EP-OS 0 173 767 dargestellt. Der Reaktorkern 5 besteht aus einem Brennelementfeld 5.0 in stehender Anordnung seiner Brennelemente, von denen lediglich zwei 5.1, 5.2 dargestellt sind. Ein und ausfahrbar in die - im vorliegenden Fall bei rechteckigem Querschnitt der Brennelemente kreuzförmigen - Zwischenräume zwischen den Brennelementen 5.1, 5.2 sind Steuerstäbe 6 gelagert, wobei zu den Steuerstäben 6 nur strichpunktiert angedeutete Steuerstabführungsstangen 6.1, an diesen Steuerstabführungsstangen 6.1 geführte Steuerstabführungsrohre 6.2 und an diesen Steuerstabführungsrohren 6.2 befestigte kreuzförmig abstehende Absorberblätter 6.3 gehören, wobei die Länge der Absorberblätter 6.3 mindestens so groß wie die Kernhöhe $h_k$ ist und vorzugsweise diese Kernhöhe etwas übersteigt, wie dargestellt. Mit einem mit den Steuerstäben 6 jeweils vereinigten Kolben-Zylinder-System, welches ein schrittweises Heben oder Senken des Steuerstabes aus dem bzw. in den Reaktorkern 5 gestattet, können die Steuerstäbe 6 mit ihrem Absorberstabteil 6.3 aus dem Kern 5 nach oben herausgefahren werden, was bedeutet, daß die Neutronenflußdichte im Kern mehr oder weniger zunimmt, oder aber sie können durch Absenken des Fluiddruckes wieder in Schwerkraftrichtung mehr oder weniger voll in den Kern 5 eingefahren werden, was bedeutet, daß die Neutronenflußdichte im Kern mehr oder weniger stark abnimmt bis hin zur vollständigen Abschaltung der Kernreaktion (abgesehen von der sogenannten Nachzerfallswärme).

Im vorliegenden Fall sei angenommen, daß jeder der Steuerstäbe 6 mit einem solchen Kolben-Zylinder-System ausgerüstet ist (wie es z.B. in der EP-A 0 148 404 oder noch näher in der EP-A 0 173 767 erläutert ist), wobei als Arbeitsfluid das Kühlwasser des Reaktors - der Reaktordruckbehälter 1 ist bis zum Pegel 1.5 mit Kühlwasser, das zugleich als Moderator dient, gefüllt - dient. Im Nennbetrieb der Kernspaltungsreaktion im Kernreaktor 5 nimmt das Kühlwasser KW gemäß den umrandeten Pfeilen $f_{KW}$, ohne daß interne Kühlwasserpumpen benötigt werden, nach dem Naturumlaufprinzip seinen Weg an den vertikal verlaufenden Kühlkanälen der Brennelemente 5.1, 5.2 usw. nach oben und kühlt die Brennelemente dabei, das spezifisch leichtere erwärmte Kühlwasser tritt dann seitlich in den Ringraum 7 zwischen Kernbehälter 4 und Druckbehälter 1.1, und zwar in dort angeordnete Wärmetauscher 8 ein, von denen lediglich einer schematisch in seinen Umrissen dargestellt ist. In den Wärmetauschern 8 ist ein U-Rohrbündel angeordnet, in welchem das Sekundärkühlmittel, insbesondere ebenfalls Wasser, zirkuliert, und das Reaktorkühlwasser KW strömt außen an diesen U-Rohren vorbei, kühlt sich dabei ab und strömt dann aufgrund seines bei der Abkühlung zunehmenden spezifischen Gewichtes weiter nach unten im Ringraum 7 in den Raum 7.0 unterhalb des Reaktorkerns 5, wonach der Umlauf von neuem beginnt.

Mit 9 ist eine Wand-Deckenkonstruktion des Heizreaktorgebäudes bezeichnet, wobei die Wand 9.1 als die beiden Behälter 1,2 mit Abstandszwischenraum 100 umfassende Ring- oder Polygon-Wand ausgebildet ist, welche zugleich als biologischer Schild dient, und wobei der äußere Sicherheitsbehälter 2 über eine (nicht dargestellte) Standzarge oder dergleichen auf einer ebenfalls nicht dargestellten Fundamentkonstruktion aufgelagert ist. Ebenfalls ist der innere Druckbehälter 1 mittels an seinem Boden angeordneter Standrippen und mittels an seinem Außenmantel angeordneter Abstandshalterippen koaxial innerhalb des Sicherheitsbehälters radial-zentrisch-und axial-wärmebeweglich aufgelagert, wobei diese Lagerelemente ebenfalls nicht dargestellt sind, weil zum Verständnis der Erfindung nicht erforderlich.

Der hydraulische Steuerstabantrieb, der eigentliche Gegenstand der Erfindung, ist als Ganzes mit CD bezeichnet; zu ihm gehören die bereits erwähnten (nicht näher dargestellten) Kolben-Zylinder-Systeme an den Steuerstäben 6, die reaktor-interne Fluidleitung 10, (davon ist lediglich eine dargestellt, es versteht sich, daß eine Mehrzahl vorhanden ist, wovon je eine je einem der Steuerstäbe 6 zugeordnet ist), wobei die Fluidleitung 10 das als Arbeitsfluid dienende Kühlwasser dem Kolben-Zylinder-System des jeweiligen Steuerstabes 6 von unten zuleitet. Zu dem Steuerstabantrieb CD gehört ferner eine außen am Reaktordruckbehälter angeordnete und druckdicht befestigte Steuerventilanordnung 11 zur Beeinflussung der Fluidmenge auf der Druckseite einer Fluidpumpe 12 zwecks Verstellung der Steuerstäbe 6 in Richtung "Heben" oder "Senken" oder aber zum Halten der eingenommenen Steuerstabposition, wobei die eine repräsentative interne Fluidleitung 10 von dieser Steuerventilanordnung 11 über eine den Deckel 1.2 durchdringende druckfeste Leitungsdurchführung 13 nach unten verlegt ist, z.B. wie dargestellt, im Ringraum 7. Zum Steuerstabantrieb CD gehört schließlich die schon erwähnte reaktor-externe Fluidpumpe 12, welche auf der Gebäudedecke 9.2 befestigt ist und welche über eine Druckleitung 12.1 und eine Saugleitung 12.2 sowie über weitere druckfeste Leitungsdurchführungen 14 in der Mantelwand des Sicherheitsbehälters 2 und 15 in der Flanschpartie des Druckbehälter-Unterteils 1.1 druckseitig mit den Kolben-Zylinder-Systemen der Steuerstäbe 6 über die schon erwähnte Steuerventilanordnung 11 und saugseitig mit dem Kühlwasserreservoir KW im Reaktordruckbehälter 1 verbunden ist. Innerhalb des Druckbehälters 1 ist ein internes Leitungsstück 12.1a der Druckleitung 12.1 von der Leitungsdurchführung 15 bis hin zur Leitungsdurchführung 13 der Steuerventilanordnung 11 verlegt. Durch das andere interne Saugleitungsstück 12.2a wird das Arbeitsfluid aus dem Kühlwasserreservoir KW von der Fluidpumpe 12 entnommen.

Fig. 1 und Fig. 2 zeigen, daß die Fluidpumpe 12 einen Druckstutzen 121 und einen Saugstutzen 122 hat, an welche die jeweilige Druckleitung 12.1 bzw. Saugleitung 12.2 angeschlossen ist, und daß (Fig. 2) zwei zueinander parallel geschaltete, jede für sich für den vollen Fluidstrom ausgelegte Fluidpumpen 12A und 12B im einzelnen vorgesehen sind, d.h., jede der beiden zueinander parallel geschalteten Fluidpumpen 12A und 12B ist für 100% der Nennleistung ausgelegt. Die beiden Pumpen sind in je einem Pumpenzweig $Z_A$ bzw. $Z_B$ eingeschaltet, wobei der Zweig $Z_A$ die Reihenschaltung der folgenden Komponenten aufweist: Ein saugseitiges Pumpensteuerventil V11, die Pumpe 12A selbst, eine Rückschlagklappe R1 und ein druckseitiges Pumpensteuerventil V12. Dementsprechend ist im Pumpenzweig $Z_b$ die Reihenschaltung eines saugseitigen Pumpensteuerventils V21, der Pumpe 12B selbst, der Rückschlagklappe R2 und des druckseitigen Pumpensteuerventils V22 vorgesehen. In der Druckleitung 12.1 sind reaktor-extern vor der Leitungsdurchführung 14 die beiden motorisch betätigbaren Isolierventile 16a, 16b hintereinandergeschaltet angeordnet, und in der reaktorexternen Saugleitung 12.2 die beiden motorisch betätigbaren Isolier-Ventile 17a und 17b kurz vor der Leitungsdurchführung 14.

Es sind vorteilhafterweise mindestens zwei parallel zueinander arbeitende Fluidpumpen 12A, 12B vorgesehen, wobei bei Störung der einen Pumpe die andere automatisch in Funktion tritt und die andere mittels ihrer beiden druck- und saugseitigen Ventile abgetrennt und dann inspiziert und gegebenenfalls repariert werden kann. Es kann zweckmäßig sein, zur Erhöhung der Verfügbarkeit der gesamten Reaktoranlage drei zueinander parallel geschaltete Pumpenzweige $Z_A$, $Z_B$ und $Z_C$ vorzusehen, weil dann im Falle einer Pumpenstörung immer noch zwei funktionstüchtige Pumpen zur Verfügung stehen.

Die in Fig. 3 als Schaltschema im Detail herausgezeichnete Steuerventilanordnung 11 des Steurstabantriebes CD weist für jeden zu betätigenden Steuerstab 6 die folgenden Steuerzweige auf:

1. Einen eingangsseitig mit der Druckleitung 12.1a und ausgangsseitig mit der Druckseite (Fluidleitung 10) des Kolben-Zylinder-Systems kommunizierenden Haltezweig A, mit erster Fluiddrossel a1 und einer gefälleaufwärts dieser ersten Fluiddrossel a1 angeschlossenen, in den Ablauf über die Bypaßleitung A1 mündenden Bypaß-Fluiddrossel a2, wobei die Drosselquerschnitte der ersten und der Bypaß-Fluiddrossel a1, a2 so bemessen sind, daß sie bei laufender Fluid-pumpe 12 einen Fluidstrom durchlassen, welcher zum Halten des jeweiligen Steuerstabes 6 in seiner jeweiligen Position ausreicht. Wenn die Pumpe 12 im Kreislauf über die Bypaß-Fluiddrossel a2 fördert, so entsteht an dem Leitungspunkt 17 ein Druckniveau, wobei dann ein Teilmengenstrom über die erste Fluiddrossel a1 in den Haltezweig A eingespeist wird. Die Bypaß-Fluiddrossel hat außerdem die Funktion des Blasenauswurfs (Entlüftung der Hydraulik-Leitungen);

2. einen Hebezweig B mit der Reihenschaltung einer Hebeventilanordnung H und einer zweiten Fluiddrossel b1, wobei der Hebezweig B mit seinen beiden Zweig-Enden vor der ersten Fluiddrossel a1 bei 17 und hinter der ersten Fluiddrossel a1 beim Anschlußpunkt 18 an den Haltezweig A angeschlossen ist; und

3. einen Senkzweig C mit der Reihenschaltung eines Senkventils SV und einer dritten Fluiddrossel c1, wobei dieser Senkzweig C mit seinem einen Ende gefälleabwärts der ersten Fluiddrossel a1 bei 18 an den Haltezweig A angeschlossen ist und mit seinem anderen Ende ebenso wie die Bypaßleitung A1 in Form einer Ablaufleitung durch entsprechende druckdichte Leitungsdurchführungen 13 durch den Deckel 1.2 in das Innere des Druckbehälters 1, d.h. in den Ablauf bzw. das Kühlwasserreservoir KW mündet.

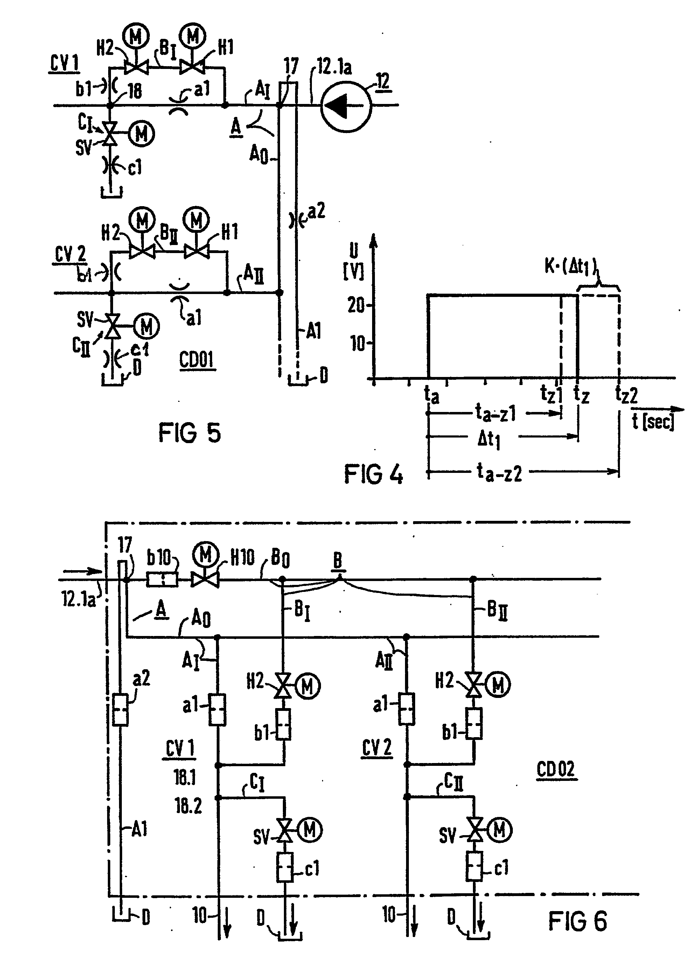

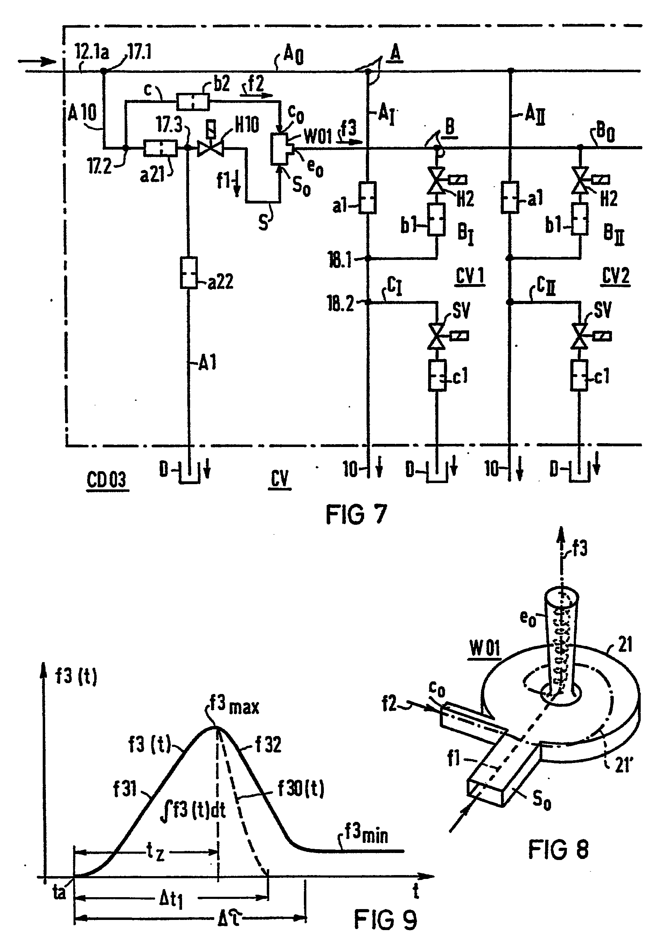

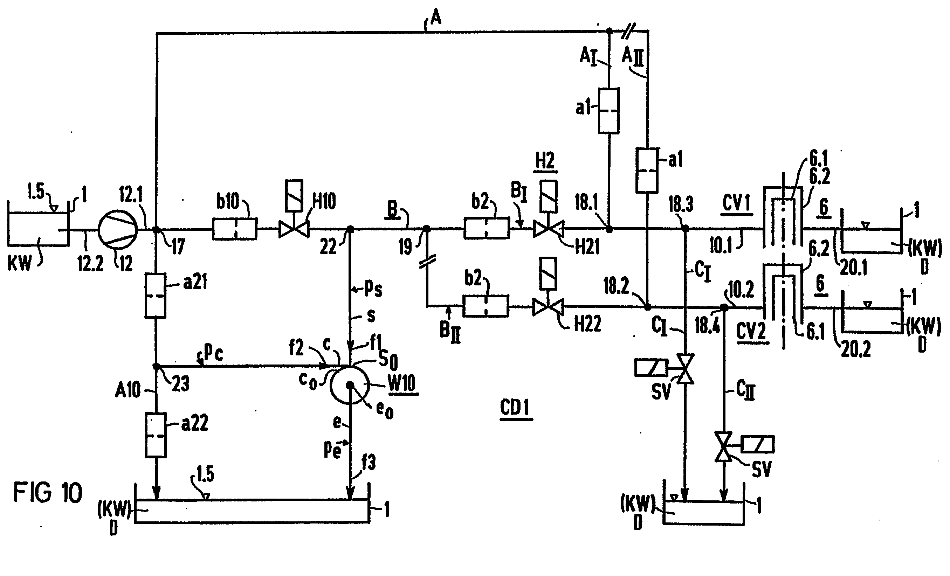

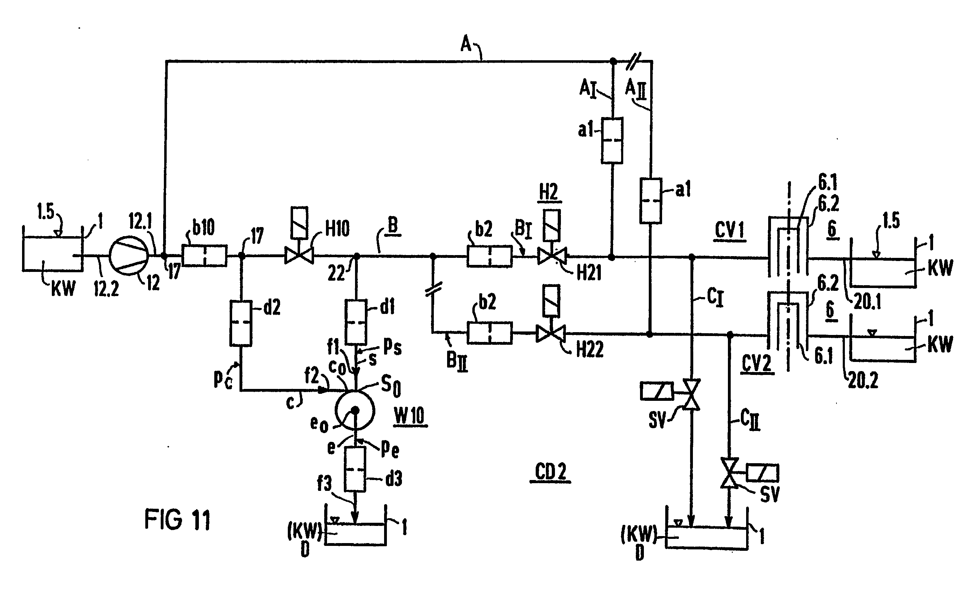

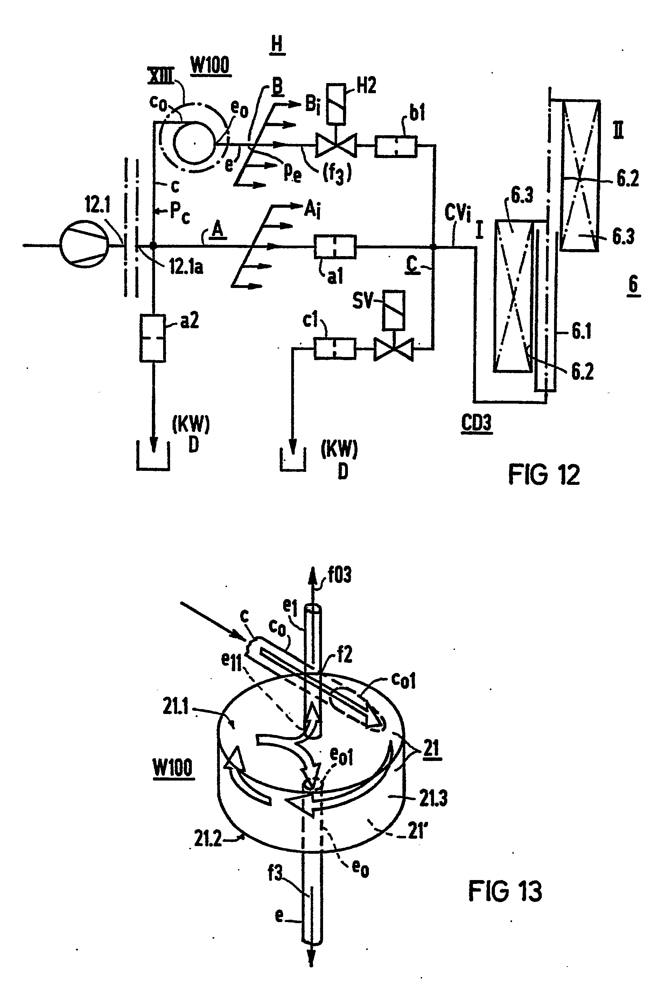

Bei dieser Steuerventilanordnung 11 sind nun Mittel vorgesehen, die bei Festsitzen eines geöffneten Hebeventils der Hebeventilanordnung H in einem der Hebezweige selbsttätig das Senkventil SV im zugehörigen Senkzweig öffnen (a) und/oder die jeweils wirksame Hebeventilanordnung H aus mindestens zwei in Reihe zueinander geschalteten Hebeventilen H1 - H2 (FIG 5); H10 - H2 (FIG 6; FIG 10; FIG 11); H10 - W01 - H2 (FIG 7) bzw. W100 - H2 (FIG 12) ausbilden und dabei den Fluidstrom durch den jeweils gestörten Hebezweig B, $B_i$ zumindest soweit zu reduzieren, daß das weitere Anheben des angesteuerten Steuerstabes 6 verhindert ist (b). Die in FIG 3 dargestellte Hebeventilanordnung H kann also definitionsgemäß im einfachsten Falle nur ein Hebeventil umfassen oder aber, wie in den weiteren Figuren dargestellt, Zweifach- oder Dreifach-Reihenschaltungen aus mehreren Hebeventilen. In den Ausführungsbeispielen nach Fig 10 und 11 werden Zweifach-Reihenschaltungen aus jeweils zwei Hebeventilen H10 - H2 durch ein Wirbelkammerventil W0 ergänzt, welches im Störungsfalle den Hebe-Fluidstrom in den Ablauf KW steuert.

Zur Verwirklichung der ersterwähnten Maßnahme (a) werden die Hebeventile H mit Stellungsanzeigern ausgerüstet, welche an der Warte verfügbare elektrische Überwachungssignale liefern. Diese können z.B. mittels Endschaltern gewonnen werden, die induktiv oder mittels Ultraschall arbeiten und ein elektrisches Signal, insbesondere eine Signalspannung, abgeben, und zwar für die Schließ-Position und die Offen-Position des Hebeventils, wobei auch Signale für Zwischenpositionen abgeleitet werden können. Es kann zweckmäßig sein zur Überwachung der Funktion der gesamten Steuerventilanordnung 11 auch die Senkventile SV mit Stellungsanzeigern zu versehen. Insbesondere bei Heizreaktoren oder schwerwassermoderierten Druckwasserreaktoren größerer Leistung etwa ab 10 MW$_{th}$, bei denen die durch unerwünschtes Ausfahren eines Steuerstabes oder einer kleinen Steuerstab-Gruppe von bis zu etwa drei Steuerstäben bedingte Änderung der Neutronenflußdichte im Kern 5 innerhalb zulässiger Grenzen bleibt, empfiehlt sich die folgende Maßnahme: es wird jeweils die Öffnungszeit des jeweiligen Hebeventils mit seiner Sollöffnungszeit, die zum Erreichen des gewünschten Steuerstabhebeschrittes erforderlich ist, verglichen. Hierzu wird - wie in Fig. 4 schematisch dargestellt - der Istwert der Zeitspanne, welche zwischen dem Signal "Hebeventil offen" und "Hebeventil zu" vergeht und der allgemein $t_{a-z}$ bezeichnet wird, verglichen mit einem Grenzwert $\Delta t_{l}$ einer Soll-Öffnungszeitspanne. Bei Überschreiten dieser Soll-Öffnungszeitspanne um einen vorgegebenen Anteil $k \cdot (\Delta t_{l})$, wobei $0 < k < 1$, wird das zugehörige Senkventil SV geöffnet. Im dargestellten Diagramm liegt die Zeitspanne $t_{a-z1}$ unterhalb der Soll-Öffnungszeitspanne $\Delta t_{l}$; hier erfolgt also ordnungsgemäßes Schliessen des Hebeventils. Der Istwert $t_{a-z2}$ liegt dagegen ca. 30% über der Soll-Öffnungszeitspanne $\Delta t_{l}$, und eine zugehörige elektronische Überwachungsschaltung, welche der Steuerventilanordnung 11 zugeordnet ist, ist so eingestellt, daß nun, nach dem die Soll-Öffnungszeitspanne $\Delta t_{l}$ um den Anteil $k(\Delta t_{l})$ überschritten und damit der Auslöse-Grenzwert erreicht ist, das zugehörige Senkventil SV geöffnet wird, wobei der Hebe-Befehl zumindest egalisiert wird, so daß der betreffende Steuerstab nicht weiter Ausfahren kann, sondern in seiner gerade eingenommenen Position verharrt. Es ist naturgemäß möglich, durch Betätigen einer größeren Gruppe von Senkventilen SV oder aller Senkventile den Fluiddruck auf der Druckseite der Kolben-Zylinder-Systeme so weit abzusenken, daß sämtliche Steuerstäbe in ihre unterste Stellung absinken, d.h. auch der Steuerstab, dessen Hebeventil in seiner Offenstellung gestört war. Man hat es in der Hand, den Ansprech-Grenzwert soweit oberhalb der Soll- Öffnungs Zeitspanne $\Delta t_{l}$, z.B. um 20 bis 40% zu legen, daß der Steuerstab, dessen Hebeventil in der Offenstellung gestört ist, nicht nennenswert weiter ausfahren, sondern sehr rasch abgefangen werden kann. Im Ausführungsbeispiel wurde ein Faktor $k$ von 0,3 zugrunde gelegt. Bevorzugt gilt $0,3 < k < 1$.

Das zweite Ausführungsbeispiel nach Fig. 5 ist für einen hydraulischen Steuerstabantrieb CD01 vorgesehen, der bei Heizreaktoren oder schwerwassermoderierten Druckwasserreaktoren kleinerer Leistung bis zu etwa 10 MW$_{th}$ eingesetzt wird. Bei solchen relativ kleinen Heizreaktoren oder Kernreaktoren ist der Absorberquerschnitt eines einzelnen Steuerstabes merklich am gesamten Neutroneneinfangquerschnitt beteiligt, so daß ein unerwünschtes Ausfahren schon eines einzigen Steuerstabes unter allen Umständen vermieden werden muß. Dies kann erreicht werden gemäß Fig. 5 dadurch, daß jede Steuerzweiganordnung, die in Fig. 3 mit CV bezeichnet und welche je einem Steuerstab 6 im Rahmen der Gesamtanordnung des hydraulischen Steuerstabantriebes CD zugeordnet ist, in ihrem Hebezweig B eine Reihenschaltung aus wenigstens zwei Hebeventilen H1, H2 aufweist, so daß beim Festsitzen des einen Hebeventils H1 bzw. H2 in seiner Offenstellung die Unterbrechung des Hebe-Fluidstromes durch das andere Hebeventil H2 bzw. H1 erfolgt und umgekehrt. In Fig. 5 sind lediglich zwei Steuerzweiganordnungen CV1, CV2 dargestellt; es versteht sich, daß entsprechend der Anzahl der Steuerstäbe 6 auch eine entsprechende Anzahl dieser Steuerzweiganordnungen vorzusehen ist. Sinngemäß zu Fig. 3 sind bei der Steuerzweiganordnung CV1 die einzelnen Halte-, Hebe und Senkzweige mit $A_{I}$, $B_{I}$ und $C_{I}$ bezeichnet und bei der Steuerzweiganordnung CV2 entsprechend mit $A_{II}$, $B_{II}$ und $C_{II}$. Allgemein kann man die Halte-, Hebe- und Senkzweige mit $A_{i}$, $B_{i}$ und $C_{i}$ bezeichnen, wobei i (1, 2 ..i) den jeweiligen Einzelzweig kennzeichnet. $A_0$ ist hier die allen Haltezweigen gemeinsame Verteilleitung, A bedeutet die Haltezweiganordnung als Ganzes. Im übrigen ist der Schaltungsaufbau so wie in Fig. 3, wobei die in das Plenum bzw. Kühlwasserreservoir mündenden Ablaufleitungen an ihren Enden mit dem Hydraulik-Symbol D gekennzeichnet sind. Die Wahrscheinlichkeit, daß von den beiden in Serie zueinander geschalteten Hebeventilen H1, H2 alle beide in ihrer Offenstellung verklemmen, ist sehr gering; auf jeden Fall würden bei dieser Störung alle Senkventile SV geöffnet werden. Davon kann man absehen, wenn man - wie weiter unten anhand von Fig. 7 bis 11 noch erläutert - ein sogenanntes Wirbelkammerventil als drittes Hebeventil, als Absteuerventil oder als Wirbeldrossel für den jeweiligen Hebezweig B, $B_{I}$, $B_{II}$ usw. vorsieht. Wie bereits erwähnt, liegt dem Steuerstabantrieb das Arbeitsstromprizip zugrunde, d.h. ein Ausfahren ist nur möglich, wenn der nötige hydraulische Vordruck von der Pumpe 12 bzw. der Pumpenanordnung geliefert wird; wenn also die Pumpe in ihrer Drehzahl verringert oder abgeschaltet wird, sinkt der Druck des Arbeitsfluids ab, und alle Steuerstäbe gelangen bzw. fallen automatisch in ihre eingefahrene Position.

Gemäß Fig. 6 ist ebenfalls jedem Steuerstab des Steuerstabantriebes CD02 je eine Steuerzweiganordnung CV1, CV2 usw. entsprechend Fig. 5 zugeordnet, jedoch ist das Vorschalt-Hebeventil (H1 in Fig. 5) nicht für jede einzelne Steuerzweiganordnung, also nicht mehrfach bzw. vielfach vorhanden, sondern nur einfach als ein allen Steuerzweiganordnungen CV1, CV2 u.s.w. gemeinsames vorgeschaltetes Haupt-Hebeventil H10 mit in Reihe dazu geschalteter Fluiddrossel b10, derart, daß dieses Haupt-Hebeventil H10, wenn es geöffnet ist, den Fluidstrom zu jedem der einzelnen Nachschalt-Hebeventile H2 durchläßt, so daß dann, wenn ein bestimmter Steuerstab angehoben werden soll, das betreffende Nachschalt-Hebeventil H2 geöffnet wird. Würde es in seiner Offenstellung klemmen, sich also nicht oder nur mit erheblicher Verzögerung schließen lassen, so wird das Haupt-Hebeventil H10 geschlossen, und sämtliche Steuerstäbe verharren damit in ihrer eingenommenen Position; ein Weiterfahren in Richtung "Heben" von irgend einem Steuerstab ist dann nicht möglich. Die Bezeichnung der übrigen Hydraulik-Bauelemente und -Leitungen ist so wie in Fig. 5 getroffen, wobei jedoch je ein getrennter Anschlußpunkt 18.1 bzw. 18.2 für die Hebezweige $B_I$, $B_{II}$ bzw. für die Senkzweige $C_I$, $C_{II}$ bezüglich der Haltezweige $A_I$ bzw. $A_{II}$ dargestellt sind. Die Symbole für die Fluiddrosseln a1, a2, b1, c1 sind in Fig. 5 etwas anders dargestellt als in Fig. 3 und 6; sie bedeuten aber dasselbe.

Bei der Variante des Steuerstabantriebes nach Fig. 6 spart man also n - 1 Hebeventile, wenn n die Anzahl der Steuerzweiganordnungen bzw. der anzusteuernden Steuerstäbe ist. - Es kann zweckmäßig sein, die Steuerschaltung nach Fig. 6 zu kombinieren mit den anhand von Fig. 4 erläuterten Maßnahmen einer Stellungsüberwachung der Hebeventile, so daß an der Warte genau erkannt werden kann, welches der Hebeventile gestört ist, und es kann weiterhin in diesem Falle ein automatisches Öffnen des zugehörigen Senkventils vorgesehen sein, so daß im Falle des bereits geschlossenen Haupt-Hebeventils H10 der betreffende Steuerstab in seine Null-Position (Einfahrposition) abgesenkt wird.

Die für die Steuerstabantriebe CD, CD01 und CD02 vorgesehenen hydraulischen Steuerzweiganordnungen nach Fig. 3, Fig. 5 und Fig. 6 erfahren noch eine wesentliche Bereicherung durch Ausführungsbeispiele hydraulischer Steuerzweiganordnungen für Steuerstabantriebe CD03, CD1, CD2 und CD3 nach Fig. 7 bis 12 . Vergleicht man die Schaltung nach Fig. 7 mit derjenigen nach Fig. 6, so stellt man fest, daß die Schaltung nach Fig. 7 hinsichtlich der Ausbildung der jedem einzelnen Steuerstabantrieb zugeordneten Steuerzweiganordnungen CV1, CV2 (usw. - es sind lediglich wiederum nur zwei Steuerzweiganordnungen dargestellt) mit Fig. 6 übereinstimmt. Eine Ergänzung und Weiterbildung der Schaltung ist in bezug auf das Haupt-Hebeventil H10 getroffen: Diesem ist ein Wirbelkammerventil W01 nachgeschaltet, welches drei hydraulische Anschlüsse $s_0$, $c_0$, $e_0$ für drei Arten von Fluidströmen, nämlich Versorgungsstrom f1, Steuerstrom f2 und Auslaßstrom f3, aufweist. Wie man erkennt, ist der interne, steuerbare Strompfad $s_0$ - $e_0$ des Wirbelkammerventils W01, welcher zwischen seinem Versorgungsstrom-Einlaß $s_0$ und seinem Ventil-Auslaß $e_0$ liegt, im Hebezweig B angeordnet. $B_0$ ist hier wiederum die allen Hebezweigen $B_I$, $B_{II}$ usw. gemeinsame Verteilleitung. Dem Wirbelkammerventil W01 wird sein Steuerstrom f2 über die Fluiddrossel b2 zugeleitet. Sie liegt in der Fluidleitung c, welche am Punkt 17.2 an den Leitungszweig A10 angeschlossen ist, der wiederum am Punkt 17.1 an die Verteilleitung A des Haltezweiges angeschlossen ist.

Die Reihenschaltung aus dem Leitungszweig A10, der Fluiddrossel a21 und der Fluiddrossel a22 ergibt zusammen den Bypaß-Zweig A1, welcher in den Ablauf D mündet und zusammen mit den ersten Fluiddrosseln a1 in den jeweiligen individuellen Haltezweigen für die definierte Einstellung eines Fluidstromes sorgt, welcher den jeweiligen Steuerstab in seiner Halteposition hält. Dieser Bypaß-Zweig A1 hat aber auch die Aufgabe, zwischen seinen beiden Fluiddrosseln a21 und a22, d.h. am Schaltungspunkt 17.3, für ein bestimmtes Druckniveau zu sorgen, welches um etwa 5 bis 10 % niedriger ist als das Druckniveau, welches vom Schaltungspunkt 17.2 durch Steuerstromleitung c und die Fluiddrossel b2 zum Steuerstrom-Anschluß $c_0$ des Wirbelkammerventils W01 weitergeleitet wird.

Bevor auf die Funktion des Wirbelkammerventils W01 im Rahmen der Schaltung nach Fig. 7 näher eingegangen wird, sei zunächst ein einzelnes Wirbelkammerventil nach Fig. 8 erläutert, dessen hydraulische Anschlüsse $s_0$, $c_0$ und $e_0$ und Fluidströme, nämlich Versorgungsstrom f1, Steuerstrom f2 und Auslaßstrom f3, genauso wie in Fig. 7 bezeichnet sind. Wirbelkammerventile sind rein fluidische Elemente, die ausschließlich aufgrund von Strömungseffekten arbeiten, keine beweglichen Teile besitzen und keine systemexterne Hilfsenergie benötigen. Vergleiche hierzu den Aufsatz "Konstruktion und Leistung von Wirbelgeräten" von H. Brombach in der Zeitschrift "messen-steuern-regeln", VEB Verlag Technik, Berlin, Heft 11, November 1978, Seiten 638 bis 642, insbesondere Seiten 641 und 642. Das in Fig. 8 beispielsweise dargestellte radiale Wirbelkammerventil (es gibt auch axiale und konische Wirbelkammerventile) besteht aus einem flach-hohlzylindrischen Wirbelkammer-Gehäuse 21, welches in seinem Inneren die Wirbelkammer 21' enthält, einem radial in die Wirbelkammer 21 einmündenden Anschlußstutzen für den Versorgungsanschluß $s_0$, einem tangential in die Wirbelkammer 21 einmündenden Anschlußstutzen für den Steuerstromanschluß $c_0$ und einem axial in bezug auf die Rotationsachse des Gehäuses 21 bzw. die Wirbelkammer 21' angeordneten Anschlußstutzen für den Auslaßstrom-Anschluß f30. Der Anschlußstutzen für den Auslaßstrom f3 kann düsen- bzw. venturidüsen-artig ausgebildet sein, wie dargestellt, um den Druckverlust möglichst klein zu halten. Der durch den radial angeordneten Anschlußstutzen $s_0$ zugeführte, punktiert dargestellte Versorgungsstrom f1 verläßt die Wirbelkammer 21' durch den axialen Anschlußstutzen $e_0$, wobei zunächst unterstellt wird, daß noch kein Steuerstrom f2 fließt. Dann ist die Drosselwirkung dieses Wirbelkammerventils relativ gering, und f1 ist gleich f3. Wird nun ein Steuerstrom f2, dessen Steuerdruck etwa 5 bis 10 % höher ist als der Druck des Versorgungsstromes f1, durch den tangentialen Anschlußstutzen $c_0$ geschickt, so wird mit zunehmender Steuerstrommenge auch eine zunehmend intensive Drallströmung in der Wirbelkammer 21' erzeugt. Deren Fliehkraft bewirkt den Aufbau eines Gegendruckes in der Wirbelkammer 21', wodurch der Zufluß des Versorgungsstroms f1 verringert (oder bei wieder abnehmendem Steuerstrom wieder vergößert) und damit gesteuert werden kann. Ein relativ geringer maximaler Steuerstromdurchsatz von etwa 10 bis 20 % des maximalen Versorgungsstromdurchsatzes f1 reicht aus, um den Versorgungsstrom f1 zum Erliegen zu bringen. Der Steuerstrom f2 ist durch gestrichelte Linien dargestellt; er strömt vom tangentialen Einlauf in Spiralen dem axialen Anschlußstutzen $e_0$ zu und setzt diese spiralige Strömung in diesem Stutzen fort. Der Pfeil f3 des Auslaßstromes ist in diesem Beispiel strichpunktiert, um damit darzustellen, daß er sowohl Anteile des Steuerstromes f2 als auch Anteile des Versorgungsstromes f1 enthält. Erreicht jedoch der Steuerstromdurchsatz f2 das vorgesehene Maximum von etwa 10 bis 20 % des Versorgungsstromes f1, so kommt letzterer zum Erliegen. Der Auslaßstrom f3 enthält dann nur noch den Steuerstrom, so daß dann also etwa 20 % des Durchsatzes des nun abgeblockten Versorgungsstromes f1 fließen.

Für die Funktion der Schaltung nach Fig. 7 sei zunächst angenommen, daß das vorgeschaltete Haupt-Hebeventil H10 geschlossen ist und mit ihm auch die Nachschalthebeventile H2 geschlossen sind. Weiterhin sei angenommen, daß der vom hydraulischen Steuerzweig CV1 angesteuerte Steuerstabantrieb um eine vorgegebene Anzahl von Schritten angehoben werden soll, und zwar soll der durch gleichzeitiges Öffnen des Nachschalt-Hebeventils H2 und des vorgeschalteten Haupt-Hebeventils H10 erzeugbare hydraulische Impuls zur Ausführung eines Hebeschrittes ausreichen, der z.B. 20 mm betragen möge. Es werden also Haupt-Hebeventil H10 und Nachschalt-Hebeventil H2 gleichzeitig geöffnet, infolgedessen gelangt der Versorgungsstrom f1 über Leitung S vom Haupt-Hebeventil durch das Wirbelkammerventil W01 in den Hebezweig B und von hier durch das Nachschalt-Hebeventil H2 und seine Fluiddrossel b1 (Teilzweig $B_I$ ) in die reaktor-interne Fluidleitung 10 zu dem zugehörigen Steuerstabantrieb. In Fig. 7 sind die Anschlußpunkte des Hebezweiges $B_I$ und des Senkzweiges $C_I$ bezüglich der Fluidleitung 10 des Haltezweiges $A_I$ mit 18.1 bzw. 18.2 bezeichnet.

Für die weitere Erläuterung sei zunächst auf das Diagramm nach Fig. 9 Bezug genommen. Dort bezeichnet $t_a$ auf der Abszissenachse den Öffnungszeitpunkt der beiden erwähnten Hebeventile H10 und H2, womit zugleich auch das Wirbelkammerventil angesteuert wird, so daß an seinem Ausgang $e_0$ ein Auslaßstrom f3 (t) fließt. Das Wirbelkammerventil W01 hat eine solche Charakteristik, daß der Auslaßstrom f3 (t) - wie es die stark ausgezogene Kurve angibt - zunächst bis zu einem Maximum $f3_{max}$ ansteigt (Kurvenast f31) und dann - wenn sich der Steuerstrom f2 auszuwirken beginnt - auf den minimalen Auslaßstrom $f3_{min}$ abfällt (Kurvenast f32). Die Zeitspanne vom Fließbeginn des Auslaßstromes f3 (t) bis zum Abfall dieses Auslaßstromes auf den Wert $f3_{min}$ ist mit $\Delta\tau$ bezeichnet. Man kann diese Zeitspanne $\Delta\tau$ auch Zeitkonstante des Wirbelkammerventils W01 nennen. Der Kurvenast f30 (t) soll die ordnungsgemäße Schließfunktion der beiden Hebeventile H10 und H2 verdeutlichen, d.h., wenn diese beiden Hebeventile bei oder kurz nach dem Maximum der Kurve f3(t) ihren Schließbefehl erhalten, weil der vorgesehene Hebeschritt des Steuerstabes ausgeführt ist, dann fällt gemäß dem Kurvenast f30(t) der Fluidstrom gemäß der Schließ-Zeitkonstante der beiden Hebeventile auf Null, so daß z.B. die Soll-Öffnungszeitspanne $\Delta$ $t_1$ eingehalten ist. Dieser Kurvenverlauf f30(t) ergäbe sich auch, wenn bei Betätigung der beiden Hebeventile H10 und H2 im Schließsinne nur eines dieser beiden Ventile schließen würde. Träte aber der an sich sehr unwahrscheinliche Fall auf, daß beide in Reihe zueinander liegende und aktivierte Hebeventile H10, H2 in ihrer Offenstellung verharren, obgleich ab dem Zeitpunkt $t_z$ Schließbefehl gegeben wird, so tritt das Wirbelventil W01 in Funktion, und aufgrund des sich mit der Zeitkonstanten $\Delta\tau$ auswirkenden Steuerstromes f2 fällt der Ausgangsstrom f3(t) gemäß dem Kurvenast f32 vom Wert $f3_{max}$ auf den Wert $f3_{min}$ ab, welch letzterer Wert etwa 10 bis 20 % des ursprünglichen Versorgungsstromes f1 ausmacht. Dieser Wert von 10 bis 20 % des Versorgungsstromes f1 ist zu gering, als daß durch ihn noch eine Beeinflussung der Steuerstabantriebe im Hebesinne erfolgen könnte. Es ergibt sich somit eine Reduzierbarkeit des Auslaßstromes f3 des Wirbelkammerventils W01 auf einen solchen Bruchteil seines Wertes in der Offenstellung durch Anlegen eines Steuerstromes f2, daß durch den so reduzierten Fluidstrom f3(t) im Hebezweig B, $B_I$ bzw. $B_{II}$ der Hebevorgang der Steuerstäbe mit Sicherheit, d.h. auch mit einem Sicherheitsabstand, unterbrochen wird. Unter Sicherheitsabstand wird hierbei verstanden, daß z.B. erst bei 50 % des normalen Versorgungsstrom-Durchsatzes f1 eine Hebevorgang des Steuerstabes ausgelöst werden kann, so daß man also mit dem unteren Wert von 10 bis 20 % des normalen Versorgungsstromes für den minimalen Ausgangsstrom $f3_{min}$ auf der sicheren Seite ist. Man erkennt weiter, daß die Zeitkonstante $\Delta\tau$ des Wirbelkammerventils, d.h., die Zeitspanne, die beim zum Zeitpunkt $\Delta\tau = 0$ bzw. $t = t_a$ eingeschaltetem Steuer- und Versorgungsstrom f2, f1 bis zum Abdrosseln des Versorgungsstromes f2 vergeht, auf die Soll-Öffnungszeitspanne $\Delta t_1$ der Hebeventile H10, H2, die zur Ausführung eines gewünschten maximal zulässigen Hebeschrittes des betreffenden Steuerstabes erforderlich ist, so abgestimmt ist, daß im Falle des Klemmens beider Hebeventile H10, H2 in ihrer Offenstellung nach oder kurz mit Erreichen der Soll-Öffnungszeit durch Reduzierung des Auslaßstromes f3(t) des Wirbelkammerventils H11 auf seinen abgedrosselten Wert $f3_{min}$ der Hebezweig B im Sinne einer Unterbrechung des Hebevorganges hydraulisch selbsttätig abgedrosselt wird.

Das Wirbelkammerventil W01, ließe sich auch für jeden der einzelnen Hebezweige $B_I$, $B_{II}$ des Ausführungsbeispiels nach Fig. 5, also mehrfach, einsetzen; besonders vorteilhaft ist es jedoch, wenn es nur dem Haupt-Hebeventil H10 gemäß Fig. 7 zugeordnet und dementsprechend wie letzteres für einen größeren Fluidstrom dimensioniert wird. Dies vereinfacht die hydraulische Schaltung beträchtlich, ohne daß man Sicherheitseinbußen in Kauf nehmen müßte.

Fig. 7 zeigt also eine bevorzugte hydraulische Schaltung des Wirbelkammerventils W01, bei welcher sein interner, steuerbarer Strompfad $s_0 - e_0$ zwischen dem Ausgang eines Vorschalt-Hebeventils, ausgeführt als Haupt-Hebeventil H10, und dem Eingang eines der als Vielzahl zueinander parallel geschalteten Nachschalt-Hebeventile H2 liegt. Das Wirbelkammerventil W10 läßt sich unschwer so dimensionieren, daß seine Zeitkonstante $\Delta\tau$ z.B. im Bereich zwischen 150 bis 250 ms liegt. Dies sind auch praktikable Verzögerungszeiten, die bei Ausführung von Steuerstab-Hebeschritten bei hydraulischen Steuerstabantrieben auftreten.

Im Diagramm nach Fig. 9 drosselt das Wirbelkammerventil bereits ab, wenn die Soll-Öffnungszeitspanne $\Delta t_1$ um ca. 20 % überschritten ist. Je nach Auslegung des Steuerstabantriebes kann $\Delta\tau$ auch etwa bis zu dreimal größer gemacht werden als der Wert $\Delta t_1$, weil der abfallende Ast f32 des Auslaßstromverlaufes ohnehin nicht mehr nennenswerte Verlagerungen des Steuerstabes im Hebesinne bewirken kann.

In Fig. 1 und 2 sind die Fluidpumpen 12 als reaktorexterne Fluidpumpen dargestellt. Es ist auch möglich, die Fluidpumpen mit der Steuerventilanordnung 11 baulich zu vereinigen; sie sitzen dann in einem druckfesten Gehäuse gekapselt außen auf dem Deckel 1.2 des Reaktordruckbehälters 1, wie dies in der DE-OS 34 35 584 in Fig. 2 dargestellt ist. Dabei kann die Länge für die Druck- und Saugleitungen 12.1, 12.2 verkürzt werden. Im Rahmen der vorliegenden Erfindung ist jedoch die reaktor-externe Anordnung der Fluidpumpen 12 bevorzugt wegen der besseren Zugänglichkeit und Wartungsmöglichkeit.

Ferner bezieht sich die Erfindung bevorzugt auf solche Brennelement-Steuerstab-Anordnungen, bei denen die Steuerstäbe mit kreuzförmigen Absorberblättern in die entsprechend kreuzförmigen Zwischenräume zwischen vier einander benachbarten Brennelementen greifen, wie es in der EP-A 0 148 404 dargestellt ist. Die Steuerstäbe können indessen auch in Zwischenräume eingreifen, die innerhalb der Brennelemente zwischen den Brennstäben vorgesehen sind, wie es z.B. die US-A 3 379 619 in einer Ausführung für Druckwasserreaktoren zeigt.

Den im folgenden anhand der FIG 10 und 11 erläuterten Beispielen liegt die Erkenntnis zugrunde, der derartige Wirbelkammerventile nicht nur in Reihe zu den Hebewentilen im jeweiligen Hebezweig der Steuerstäbe geschaltet werden können (in diesem Fall sperren oder drosseln sie den Hebe-Fluidstrom nach einer bestimmten Zeitspanne ab, d.h. wenn ein Hebeventil in seiner Öffnungsstellung klemmen würde), sondern daß auch Sicherheitsschaltungen für die Hebezweige von gattungsgemäßen Steuerstabantrieben mit großem Vorteil realisierbar sind, bei denen die Wirbelkammerventile im Ansprechfalle Fluidströme vom Hauptfluidstrom abzweigen und in einen Ablauf steuern.

Man erkennt, daß in FIG 10 zu FIG 3 bis FIG 8 gleichartige hydraulische Elemente bzw. Komponenten auch die gleichen Bezugszeichen tragen, so daß die grundsätzliche Funktion der Schaltung nach FIG 10 leicht erkennbar ist. Im Unterschied zu FIG 3 bis 8 sind zwei Steuerstäbe 6 angeordnet, symbolisch für eine Mehrzahl bzw. Vielzahl derartiger angesteuerter Steuerstäbe. Dabei symbolisiert von denen koaxial zueinander gezeichneten Rohren das äußere Rohr 6.2 jeweils das bewegte Steuerstabführungsrohr, welches durch den (nicht dargestellten) Kolben auf- und abwärts bewegt werden kann, und das innere Rohr die Steuerstabführungsstange 6.1. Mit CV1 ist die dem oberen Steuerstab zugeordnete Steuerzweiganordnung als Ganzes bezeichnet, mit CV2 die dem unteren Steuerstab 6 zugeordnete. Zu einer Steuerzweiganordnung CV1 bzw. CV2 usw. gehört jeweils ein gemeinsamer Haltezweig A, der sich für jede Steuerzweiganordnung in die Teil-Haltezweige $A_I$ bzw. $A_{II}$ aufgabelt. Letztere sind an den Anschlußpunkten 18.1 bzw. 18.2 an die Teil-Hebezweige $B_I$ bzw. $B_{II}$ angeschlossen. Der als Ganzes mit B bezeichnete Haltezweig weist einen allen Teil-Haltezweigen gemeinsamen Leitungsabschnitt mit dem Vorschalt-Hebeventil H10 und der diesem vorgeschalteten Fluiddrossel b10 auf. Am Schaltungspunkt 19 teilt sich dann der Gesamthebezweig B auf die einzelnen Teil-Hebezweige $B_I$, $B_{II}$ usw. auf, von denen jeder ein separates Nachschalt-Hebeventil H21, H22 usw. mit zugehöriger vorgeschalteter Fluiddrossel b2 aufweist. Schließlich weist jede Steuerzweiganordnung CV1, CV2 usw. je einen Senkzweig $C_I$ bzw. $C_{II}$ auf, welch letztere an den Anschlußpunkten 18.3 bzw. 18.4 an die Teil-Hebezweige $B_I$ bzw. $B_{II}$ angeschlossen sind und über ein fernbetätigbares Senkventil SV jeweils im Bedarfsfalle eine Verbindung zum hydraulischen Ablauf D, in diesem Falle das Kühlwasser-Plenum (KW) des Reaktordruckbehälters 1, herstellen. Die aus FIG 1 erkennbare reaktor-interne Fluidleitung 10 ist entsprechend der in FIG 7 dargestellten Mehrfach-Anordnung auch aufgeteilt und dort mit 10.1 bzw. 10.2 bezeichnet. Wenn der durch die Halte bzw. Hebezweige A, $A_I$, $A_{II}$ bzw. B, $B_I$, $B_{II}$ den Antrieben der Steuerstäbe 6 zugeleitete Fluidstrom in deren Kolben-Zylindersystemen seine Arbeit geleistet hat, wird er aus den Steuerstäben in das Kühlwasserplenum KW entlassen, was durch die Fluidleitungen 20.1 bzw. 20.2 angedeutet ist. Die Fluiddrosseln in den Teil-Haltezweigen $A_I$, $A_{II}$ sind wieder mit a1 bezeichnet.

An die bereits erläuterte Reihenschaltung H10-H2 aus Vorschalt- und jeweiligem Nachschalt-Hebeventil (für H2 steht, wie gesagt, eine Vielzahl von separaten Nachschalt-Hebeventilen H21, H22 usw.) ist das Wirbelkammerventil W10 angeschlossen und zwar mit seiner Versorgungsleitung s an den Hebe-Zweig B an einer Schaltungsstelle 22 zwischen den beiden Hebeventilen H10 und H2. Dieses Wirbelkammerventil W10 funktioniert generell so, daß es den Fluidstrom im Hebezweig B bzw. im jeweiligen Teil-Hebezweig $B_I$, $B_{II}$ usw. reduziert, wenn dieser Fluidstrom über die Soll-Öffnungszeitspanne $\Delta t_1$ hinaus fließt und durch die Reihenschaltung der Hebeventile H10-H2 aufgrund einer gestörten Ventilfunktion nicht abgesperrt werden kann. In diesem Falle wird der Hebevorgang des angesteuerten Steuerstabes 6 sofort unterbrochen. Diese Funktion des Wirbelkammerventils in serieller Schaltung im bezug auf das Vorschalt- und das Nachschalt-Hebeventil wurde anhand der FIG 3 bis 9 näher erläutert. Diese serielle Schaltung setzt zum Ansprechen des Wirbelkammerventils voraus, daß der Fluidstrom durch die beiden hintereinandergeschalteten Hebeventile nach Ablauf der Soll-Öffnungszeitspanne $\Delta t_1$ nicht unterbrochen werden kann. Im Rahmen der Beispiele nach FIG 10 und 1 dagegen ist es möglich, das Wirbelkammerventil W10 schon dann zum Ansprechen zu bringen, wenn jeweils eines der beiden in Reihe zueinander geschalteten Hebeventile H10-H2, und zwar insbesondere das Vorschalt-Hebeventil H10, gestört ist. Bevor auf Schaltung und Funktion des Wirbelventils W10 in der Schaltung nach FIG 10 näher eingegangen wird, seien zunächst einige ergänzende Ausführungen zur Wirkungsweise des Wirbelventils nach FIG 8 gemacht. Steuerstrom f2 und Versorgungsstrom f1 können auch in ihrer Funktion umgekehrt werden, d.h., wenn der Vordruck des Versorgungsstromes f1 um einige wenige Prozent, z.B. 3 bis 10 %, größer ist als der Druck des Steuerstromes f2, so kann der Versorgungsstrom die sperrende Drallströmung des Steuerstromes f2 in der Wirbelkammer 21' aufheben, und das an sich gesperrte Wirbelkammerventil wird dann wieder durchlässig. Von der letzterwähnten Funktion der Steuerung der Durchlässigkeit des Wirbelkammerventils mit einem dominierenden Versorgungsstrom f1 wird im Rahmen der folgenden zwei Ausführungsbeispiele Gebrauch gemacht.

Der Pfeil f3 des Auslaßstromes ist strichpunktiert, um damit, wie erwähnt, darzustellen, daß er sowohl Anteile des Steuerstromes f2 als auch Anteile des Versorgungsstromes f1 enthält. Erreicht der Steuerstromdurchsatz f2 das vorgesehene Maximum von etwa 10 bis 20 % des Versorgungsstromes f1, so kommt letzterer zum Erliegen, und das Wirbelkammerventil sperrt. Der Auslaßstrom f3 enthält dann nur noch den Steuerstrom f2, so daß dann also etwa 20 % des Durchsatzes des nun abgeblockten Versorgungsstromes f1 fließen.

Das Wirbelkammerventil W10, z.B. in der Ausführung nach FIG 8, ist nun gemäß der Schaltung nach FIG 10 mit seiner Versorgungsleitung s an den Hebezweig B (Anschlußpunkt 22), d.h. zwischen Vorschalt- und Nachschalt-Hebeventil H10, H2 angeschlossen, seine Auslaßleitung e mündet in einen Ablauf bzw. in das Kühlwasser-Reservoir KW des Druckbehälters 1 und seine Steuerleitung c ist an den Hebezweig B stromaufwärts des Vorschalt-Hebeventils H10 über wenigstens eine Fluiddrossel a21 zur Erzeugung eines hydraulischen Druckniveaus $p_c$ angeschlossen. Wie erkennbar, ist zur Einstellung dieses Steuerdruckes $p_c$ in der Steuerleitung c ein in den Ablauf KW mündender Bypaß A10, bestehend aus der Reihenschaltung wenigstens zweier Fluiddrosseln a21, a22 stromaufwärts des Vorschalt-Hebeventils H10 an den Hebezweig B bzw. der Druckleitung 12.1 der Pumpe 12 am Anschlußpunkt 17 angeschlossen, wobei die Steuerleitung c vom Abzweigpunkt 23 zwischen den beiden Fluiddrosseln a21 und a22 abgeht. Das Druckniveau $p_c$ ist nun so eingestellt, daß es bei geschlossenem Vorschalt-Hebeventil H10 größer ist als das Druckniveau $p_s$ in der Versorgungsleitung s, so daß das Druckniveau $p_c$ somit eine sperrende Drallströmung im Wirbelkammerventil W10 aufrecht erhält. Bei geöffnetem Vorschalt-Hebeventil H10 ist dieses Druckniveau $p_c$ in der Steuerleitung c dagegen kleiner als das Druckniveau $p_s$ in der Versorgungsleitung s, so daß nach Ablauf einer Zeitkonstanten $\Delta\tau$ des Wirbelkammerventils W10, entsprechend einer Zeitspanne $\Delta t_2$, welche gleich oder etwas größer ist als die Soll-Öffnungszeitspanne $\Delta t_1$ der Hebeventile H10, H2 zur Ausführung eines gewünschten, maximal zulässigen Hebeschrittes, die Sperrwirkung des Steuerstromes f2 durch den Versorgungsstrom f1 aufgehoben und der größte Teil des Fluidstromes im Hebezweig B als Versorgungsstrom f1 über das geöffnete Wirbelkammerventil W10 im Sinne einer Unterbrechung des Hebevorganges in den Ablauf KW abgesteuert wird. Der Restmassenstrom, der jetzt noch durch den Hebezweig B zum Antrieb des betreffenden Steuerstabes 6 fließen kann (vorausgesetzt, daß ein zugehöriges Nachschalt-Hebeventil H2 auch gestört ist) reicht nicht mehr aus um einen Hebevorgang aufrechtzuerhalten oder einzuleiten. Zum besseren Verständnis der Wirkungsweise sind noch einmal die verschiedenen Zustände im folgenden erläutert.

a) Schwebe- bzw. Haltezustand (Normalbetrieb):

Beide Hebeventile H10 und H2 (beziehungsweise das betreffende Nachschalt-Hebeventil H21 oder H22) sind geschlossen. Über den Haltezweig A fließt der zum Halten des Steuerstabes 6 erforderliche Fluidstrom. Im Bypaß-Zweig A10 sind die Drosseln a21 und a22 so ausgewählt, daß sich in der Steuerleitung c ein geringfügig höherer Druck $p_c$ als in der Versorgungsleitung s (Druck $p_s$) einstellt und daß der Fluidstrom über das Wirbelkammerventil W10 vom tangentialen Eingang $c_0$ zum axialen Ausgang $e_0$ ausreicht, um den geforderten Sperrzustand einzustellen. Sperrzustand heißt, wie bereits erwähnt: Strömungswirbel aufgebaut und kein Fluidstrom von der Versorgungsleitung s zur Auslaßleitung e. Hat sich ein eventuell vorhandener Überdruck aus dem abgeschlossenen Rohrvolumen zwischen den beiden Hebeventilen H10 und H2 über das Wirbelkammerventil von s nach s abgebaut bzw. entlastet, so kann sich in der Wirbelkammer 21' (vergleiche FIG 8) eine Drallströmung bzw. ein Wirbel ausbilden, und das Wirbelkammerventil W10 sperrt.

b) Hebevorgang (Normalbetrieb):

Die Ventile H10 und H2 werden gleichzeitig geöffnet und für eine kurze Zeitspanne $\Delta t_1 < \Delta t_2$ ($\Delta t_2=$ Zeit, nach der der Sperrzustand im Wirbelkammerventil abgebaut ist) solange offen gehalten, bis der zum Heben in die nächste Stufe erforderliche Hebemassenstrom zusätzlich zum Schwebe- bzw. Haltemassenstrom lange genug geflossen ist. In dieser Zeitspanne $\Delta t_1$ ist der Druck $p_s$ in der Versorgungsleitung s, obwohl er größer ist als der Druck $p_c$ in der Steuerleitung c, nicht in der Lage, den Wirbel in der Wirbelkammer 21' (Ursache für den Sperr-zustand) ganz abzubauen.

c) Hebevorgang (angenommener Defekt der beiden Ventile H10 und H2):

Die zwei in Reihe geschalteten Ventile H10 und H2 bleiben eine Zeitspanne $\Delta t_2 > \Delta t_1$ göffnet. Bei einsetzendem Hebevorgang stellt sich in der Versorgungsleitung s ein Druck $p_s$ ein, der sehr viel höher ist als der Druck $p_c$ in der Steuerstromleitung c. Kann dieser Druck $p_s$ nun längere Zeit (die mindestens $\Delta t_2$ oder mehr beträgt) auf den $s_0$-Eingang des Wirbelkammerventils W10 einwirken, so wird sich je nach gewählter Gehäusegeometrie des Wirbelkammerventils der Sperrzustand mehr oder weniger schnell aubbauen. Wenn sich schließlich der im Schwebezustand (siehe den vorstehend erläuterten Betriebszustand a) zuvor aufgebaute Wirbel nicht mehr aufrechterhalten läßt, wird ein Strömungspfad von der Versorgungsleitung s durch die Wirbelkammer zur Auslaßleitung e freigegeben. Dieser Pfad mit seiner radialen Einströmung und axialen Ausströmung weist einen sehr geringen Druckverlustbeiwert auf und ermöglicht durch den resultierenden geringen Fließwiderstand den Abfluß des größten Teiles des Hebemassenstromes in den Ablauf bzw. das Plenum KW. Durch diesen nun offenen Bypaß $s_0$-$e_0$ erhöht sich der Druckverlust an der Drossel b10 und an dem Ventil H10 aufgrund eines erhöhten Massenstromes des Fluids. Der Druck $p_s$ in der Versorgungsleitung s kann geringfügig unter den Druck $p_c$ in der Steuerleitung c fallen (er ist dann immer noch größer als der Druck am Schaltungspunkt 18.1 hinter dem Nachschalt-Hebeventil H2), jedoch kann man durch die Auslegung des Wirbelkammerventils W10 verhindern, daß sich auch in diesem Zustand erneut ein Wirbel über den $c_0$-Eingang ausbilden kann. Ein weiterer Hebevorgang wird so nicht mehr möglich.

d) Vorschalt-Hebeventil H10 defekt und Nachschalt-Hebeventil H2 geschlossen:

Bleibt das Ventil H10 dauernd geöffnet, so wird sich nach einer Zeitspanne $\geq t_2$ durch den in der Versorgungsleitung s herrschenden Druck $p_s$, der höher ist als der Druck $p_c$ in der Steuerleitung c, der Wirbel in der Wirbelkammer 21' abbauen und der Strömungspfad $s_0$-$e_0$ durch die Wirbelkammer hin-durch freigegeben. Wird nun das Ventil H2 geöffnet, so ist kein Hebevorgang möglich.

e) Nachschalt-Hebeventil H2 defekt und Vorschalt-Hebeventil H10 geschlossen:

Wenn das Hebeventil H2 dauernd geöffnet bleibt, so wird sich in der Versorgungsleitung s der Druck vom Ausgang der Teil-Hebezweige $A_1$ bzw. $A_2$ (Schaltungspunkt 18.1) oder ein niedrigerer Druck einstellen. Je nach Ventilauslegung wird das Wirbelkammerventil W10 im Sperrzustand verharren oder einen geringen Anteil des Schwebevolumenstromes bzw. Haltemassenstromes abfließen lassen.

Beim zweiten Ausführungsbeispiel nach FIG 11 sind die Steuerstromleitung c und die Versorgungsleitung s des Wirbelkammerventils W10 jeweils über Fluiddrosseln d2 bzw. d1, die dem Druckabgleich dienen, unmittelbar vor bzw. hinter dem Vorschalt-Hebeventil H10 an den Hebezweig B angeschlossen. Auch in der Auslaßleitung e des Wirbelkammerventils W10 ist, wie dargestellt, zweckmäßig eine dem Druckabgleich dienende weitere Fluiddrossel d3 angeordnet. Im übrigen unterscheidet sich dieser hydraulische Steuerstabantrieb CD2 nicht von demjenigen CD1 nach FIG 6. Das Besondere dieser Variante CD2 besteht darin, daß beim Hebevorgang mit angenommenem Defekt der beiden Hebeventile H10 und H2 nach der Zeitspanne $\geq t_2$ der Druckunterschied zwischen der Steuerstromleitung c und der Versorgungsleitung s im wesentlichen nur durch das Ventil H10 bestimmt und somit recht gering wird; die Fluiddrosseln d1, d2 und d3 dienen nur zum Feinabgleich. Dies führt dazu, daß das für die Ventilauslegung wichtige Druckverhältnis $(p_c - p_e)/(p_s - p_e)$, wobei $p_e$ der Druck in der Ausgangsleitung nach dem Wirbelkammerventil W10 ist, vom ersten Augenblick, in dem die beiden seriellen Hebeventile H10, H2 geöffnet werden (wobei das Wirbelventil W10 sich noch im Sperrzustand befindet) bis hin zu dem Zustand völlig abgebauter Wirbel bzw. Drallströmung (Bypaß $s_0$-$e_0$ ganz geöffnet) annä-hernd konstant bleibt. Im übrigen ist die Funktion des Wirbelkammerventils W10 zusammen mit seiner hydraulischen Beschaltung so wie diejenige, welche im Zusammenhang mit der Schaltung CD1 nach FIG 10 vorstehend erläutert wurde. Da bei der Schaltung CD2 nach FIG 11 im Schwebe- bzw. Haltezustand (Normalbetrieb) -vergleiche Abschnitt (a) der Beschreibung von FIG 10 - die Strecke $c_0$-$e_0$ des Wirbelkammerventils W10 geöffnet ist (es fließt ein Steuerstrom f2 in die Auslaßleitung e), so ist das Druckgefälle an den Fluiddrosseln d2 und d3, ferner dasjenige an der vorgeschalteten Fluiddrossel b10 und das interne Druckgefälle der Strecke $c_0$-$e_0$ innerhalb der Wirbelkammer 21' zu berücksichtigen für die hydraulische Bemessung des Halte-oder Schwebestranges a. Das heißt, in diesem Normalbetrieb wirkt das Wirbelkammerventil W10 wie eine normale Fluiddrossel innerhalb eines Bypaßzweiges zum Ablauf KW in Reihe zu den Fluiddrosseln b10, d2 und d3.

In FIG 10 und FIG 11 ist lediglich eine Fluidpumpe 12 gezeichnet, um damit zum Ausdruck zu bringen, daß der hydraulische Steuerstabantrieb CD1 bzw. CD2 nach der Erfindung mit einer Fluidpumpe funktioniert. Vorteilhafter ist es indessen, die Redundanz durch mindestens zwei parallel geschaltete Fluidpumpen (FIG 2) zu verbessern, wie anhand von FIG 2 bereits erläutert.

Beim letzten Ausführungsbeispiel nach FIG 12 und FIG 13 ist - siehe FIG 12 - eines der wenigstens zwei in Reihe zueinander geschalteten Hebeventile W100 und H2 der Hebeventilanordnung H eine Wirbeldrossel W100. Der grundsätzliche Aufbau dieser Steuerzweiganordnung CV für den hier als Ganzes mit CD3 bezeichneten Steuerstabantrieb ist so, wie bisher anhand der FIG 3 oder FIG 6 erläutert, d.h., es sind wieder ein Haupt-Haltezweig A mit Teil-Haltezweigen $A_i$, ein Haupt-Hebezweig B mit Teil-Hebezweigen $B_i$ vorgesehen. Ferner ist hier ein einziger Haupt-Senkzweig C vorhanden, welcher allen Steuerzweiganordnungen $CV_i$ gemeinsam ist. Ein einziger repräsentativer und schematisch dargestellter Steuerstab ist in zwei Positionen, einer unteren eingefahrenen Position I seiner Absorberblätter 6.3 und in einer ausgefahrenen oder teilausgefahrenen oberen Position II dargestellt. 6.1 bedeutet wieder eine Steuerstabführungsstange und 6.2 ein Steuerstabführungsrohr, welch letzterem eine (nicht näher dargestellte) Kolben-Zylinder-Anordnung zugeordnet ist, wie anhand der FIG 1 bereits erläutert.

FIG 13 zeigt vergrößert in schematischer Darstellung die Wirbeldrossel W100 mit einem eine zylindrische Wirbelkammer 21' umgebenden Gehäuse, mit einem über eine tangentiale Düse $c_{01}$ in die Wirbelkammer 21' einmündenden, an eine Gehäuseumfangswand 21.3 angeschlossenen Anschluß bzw. Anschlußstutzen $c_0$ für eine Steuerstromleitung c und mit einer über eine axiale Düse $e_{01}$ mit der Wirbelkammer 21' kommunizierenden, an die (in der Figur untere) Gehäusestirnwand 21.2 angeschlossenen Anschlußleitung e mit Anschlußstutzen $e_0$. Die in der Figur obere Gehäusestirnwand ist mit 21.1 bezeichnet. An diese der axialen Düse $e_{01}$ der Auslaßleitung e gegenüberliegende Gehäusestirnwand ist eine weitere Auslaßleitung $e_1$ mit im Vergleich zur Auslaßleitung e geringerem Querschnitt angeschlossen. Diese weitere Auslaßleitung $e_1$ dient als Entlüftungsleitung und zur Abführung von Expansionswasser; sie kommuniziert mit ihrem nicht dargestellten anderen Leitungsende mit einem hydraulischen Ablauf, d.h. also dem Kühlwasserreservoir KW des Reaktordruckbehälters 1.

Eine solche Wirbeldrossel W100 ist ein passiver fluidischer Widerstand. Durch die von der Pumpendruckleitung 12.1 bw. 12.1A (FIG 12) kommende tangentiale Steuerleitung c wird dem Fluid eine Drallströmung in der Wirbelkammer 21' aufgedrückt, auch Wirbel genannt. Die Strombahnen eines solchen Wirbels sind logarithmische Spiralen. Durch die verlustarme Beschleunigung der Fluidteilchen entstehen nahe der axialen Ausgangsdüse $e_{01}$ große Tangentialgeschwindigkeiten und damit auch große Fliehkräfte. Die Fliehkräfte erzeugen ein Gegendruck, der den Zufluß zur Wirbelkammer klein hält. Der unter Unterdruck stehende Wirbelkern einer solchen mit Flüssigkeit betriebenen Wirbeldrossel füllt sich mit Dampf oder Gas. Der Fließwiderstand von $c_0$ bis $e_0$ der Wirbeldrossel W100 bei aufgebautem Wirbel sei mit $Z_2$ bezeichnet; dieser ist um den Faktor $k'$ größer als der Fließwiderstand $Z_1$ der Wirbeldrossel, welcher vorhanden ist, wenn der Fluidstrom durch die Steuerleitung c gerade eingeschaltet ist und ein Wirbel sich noch nicht aufgebaut hat. Eine solche Wirbeldrossel W100 läßt sich so konstruktiv ausbilden, daß der Faktor $k'$ z.B. im Bereich zwischen 5 und 20 liegen kann. Die in FIG 13 eingezeichneten Strömungspfeile symbolisieren einen Zustand, bei dem sich ein Wirbel gerade aufbaut, so daß der noch relativ kleine Fließwiderstand $Z_1$ vorliegt. Es fließt also der größte Teil des ankommenden Steuerstromes f2 als Auslaßstrom f3 zum Hebeventil H2. Wenn sich der Wirbel in der Wirbelkammer 21' ausgebildet hat, fließen etwa 10 bis höchstens 20 % des Steuerstroms f2 durch die axiale Auslaßleitung e zum Hebeventil H2; diese Menge an Fluid reicht nicht aus, ein weiteres Heben des Steuerstabes 6 (FIG 12) mit seinen Absorberblättern 6.3 herbeizuführen.

Die Funktion der Schaltung nach FIG 12 ist wie folgt: Soll einer der angewählten Steuerstäbe 6 um einen Schritt bzw. eine Schritteinheit angehoben werden, so wird sein zugehöriges Hebeventil H2 im zugeordneten Teil-Hebezweig $B_i$ geöffnet. Die nun einsetzende Fluidströmung, gespeist von der Pumpendruckleitung 12.1, 12.1a läßt eine Strömung vom Steueranschluß $c_0$ bis zum Auslaß $e_0$ in der Wirbeldrossel W100 entstehen, diese interne Strömung in der Wirbeldrossel wird vom Druckgefälle ($p_c - p_e$) > 0 angetrieben. Da während der Sollöffnungszeitspanne $\Delta t_1$ des Hebeventils H2, welche z.B. 200 ms betragen kann, sich ein Wirbel innerhalb der Wirbeldrossel W100 noch nicht fertig ausgebildet hat, so ist der Fließwiderstand der Wirbeldrossel auf dem relativ niedrigen Wert $Z_1$. Der Steuerstab 6 erhält also einen genügend großen Impuls bzw. Fluidmengenstrom zur Ausführung des gewünschten Hebeschrittes. Nach Ablauf der Sollöffnungszeitspanne $\Delta t_1$ ist das Normale, daß das Hebeventil H2 schließt. Damit wird der Auslaßstrom f3 der Wirbeldrossel unterbrochen, und der im Entstehen begriffene Wirbel bricht zusammen, so daß über die zweite Auslaßleitung $e_1$ nur noch Luft bzw. Gase und eventuell etwas Expansionswasser fließen können. Sollte dagegen das Hebeventil H2 nach Ablauf seiner Sollöffnungszeitspanne $\Delta t_1$ immer noch trotz Schließbefehls in seiner Offenstellung sich befinden, d.h. Klemmen, so kann der Fluidstrom f3 (dieser ist zur Symbolisierung dieses nicht normalen Zustandes in Klammern gesetzt) weiter fließen bis zum Ablauf der Zeitspanne $\Delta t_2$, welche etwas größer ist als $\Delta t_1$, z.B. um 20 bis 30 %. Nach Ablauf der Zeitspanne $\Delta t_2$ hat sich der Wirbel innerhalb der Wirbelkammer 21' (FIG 13) voll ausgebildet, so daß nun der erhöhte Fließwiderstand $Z_2$ vorliegt, durch welchen der Auslaßstrom f3 auf z.B. 10 % seines Maximalwertes reduziert wird; damit ist dieser Auslaßstrom zum Heben des Steuerstabes 6 nicht mehr geeignet bzw. wirkungslos. An der Steuerwarte kann man durch die Stellungsfernanzeige erkennen, daß das betreffende Hebeventil H2 seine Schließstellung nicht eingenommen hat, so daß entsprechende Reparaturmaßnahmen bzw. eine Auswechslung des gestörten Hebeventils vorgenommen werden können.

So wie das serielle Wirbelkammerventil W01 ist bevorzugt auch die Wirbeldrossel W100 einer Mehrzahl von Steuerzweiganordnungen $CV_i$ und dementsprechend eine Mehrzahl von Teil-Hebezweigen $B_i$ gemeinsam. Bei der Wirbeldrossel W100 ergibt sich eine relativ einfache Reihenschaltung, weil diese Wirbeldrossel sowohl die Funktion eines normalen Vorschalt-Hebeventils als auch die Funktion des steuerbaren Fließwiderstandes in sich vereinigt. Die redundante Reihenschaltung wird also gebildet durch die "Vorschalt"-Wirbeldrossel und je ein nachgeschaltetes Hebeventil H2 in den jeweiligen parallel zueinander liegenden Teil-Hebezweigen $B_i$.

**Patentansprüche**

1. Hydraulischer Steuerstabantrieb (CD) für wassergekühlte Kernreaktoren, insbesondere Heizreaktoren,
- mit einem Reaktordruckbehälter (1),
- mit einem darin gelagerten Reaktorkern (5), bestehend aus einem Brennelementfeld (5.0) in stehender Anordnung und in Zwischenräume innerhalb oder zwischen den Brennelementen (5.1,5.2) ein- und ausfahrbar gelagerten Steuerstäben (6) sowie einer Tragstruktur für Brennelemente und Steuerstäbe und ihrer Antriebe,
- wobei die Steuerstäbe (6) entgegen der Schwerkraft ausfahrbar und in Schwerkraftrichtung einfahrbar sind und Antriebsstangen (6.2) der Steuerstäbe (6) mit hydraulischen Kolben-Zylinder-Systemen versehen sind, welchen von unten das Kühlwasser als Arbeitsfluid über reaktor-interne Fluidleitungen (10) zuführbar ist, wobei das Kühlwasserreservoir (KW) als hydraulischer Ablauf dient,
- mit einer Fluidpumpenanordnung (12), die über Druck- und Saugleitungen (12.1,12.2) und zugehörige Leitungsdurchführungen (14,15) druckseitig mit den Kolben-Zylinder-Systemen und saugseitig mit dem Kühlwasserreservoir (KW) im Reaktordruckbehälter (1) verbunden ist,
- und mit einer außen am Reaktordruckbehälter (1) angeordneten Steuerventilanordnung (11) zur Beeinflussung der Fluidmenge auf der Druckseite der Fluidpumpe (12) zwecks Verstellung der Steuerstäbe (6) in Richtung "Heben" oder "Senken" oder aber zum Halten der eingenommenen Steuerstabposition, **dadurch gekennzeichnet,** daß die Steuerventilanordnung (11) für jeden zu betätigenden Steuerstab (6) die folgenden Steuerzweige aufweist:
- einen eingangsseitig mit der Druckleitung (12.1a) und ausgangsseitig mit der Druckseite des Kolben-Zylinder Systems kommunizierenden Haltezweig (A), mit erster Fluiddrossel (a1) und einer gefälleaufwärts dieser ersten Fluiddrossel angeschlossenen, in den Ablauf mündenden Bypaß-Fluiddrossel (a2), wobei die Drosselquerschnitte der ersten (a1) und der Bypaß-Fluiddrossel (a2) so bemessen sind, daß sie bei laufender Fluidpumpe (12A bzw.12B) einen Fluidstrom durchlassen, welcher zum Halten des jeweiligen Steuerstabes (6) in seiner jeweiligen Position ausreicht,
- einen Hebezweig (B) mit der Reihenschaltung einer Hebeventilanordnung (H) und einer zweiten Fluiddrossel (b1), welcher mit seinen beiden Zweig-Enden vor und hinter der ersten Fluiddrossel (a1) an den Haltezweig (A) angeschlossen ist,
- und einen Senkzweig (C) mit der Reihenschaltung eines Senkventils (SV) und einer dritten Fluiddrossel (c1), welcher mit seinem einen Ende gefälleabwärts der ersten Fluiddrossel (a1) an den Haltezweig (A) angeschlossen ist und mit seinem anderen Ende in das Kühlwasserreservoir (KW) mündet,
- wobei Mittel vorgesehen sind, bei Festsitzen eines Hebeventils in einem der Hebezweige (B, $B_I$, $B_{II}$) in seiner Offenstellung selbsttätig das Senkventil (SV) im zugehörigen Senkzweig (C) zu öffnen und/oder die jeweils wirksame Hebeventilanordnung (H) aus mindestens zwei in Reihe zueinander geschalteten Hebeventilen (H1, H2; H10, H2; H10, W01, H2; W100, H2) auszubilden und dabei den Fluidstrom durch den jeweils gestörten Hebezweig (B, $B_I$, $B_{II}$) zumindest soweit zu reduzieren, daß das weitere Anheben des angesteuerten Steuerstabes verhindert ist.

2. Steuerstabantrieb nach Anspruch 1, **dadurch gekennzeichnet,** daß die Hebeventilanordnung (H; H1, H2, H10) und gegebenenfalls die Senkventile (SV) mit Stellungsanzeigern ausgerüstet sind, welche an der Warte verfügbare Überwachungssignale liefern.

3. Steuerstabantrieb nach Anspruch 2, insbesondere für Heizreaktoren oder schwerwassermoderierte Druckwasserreaktoren größerer Leistung ab etwa 10 MW$_{th}$, bei denen die durch unerwünschtes Ausfahren eines Steuerstabes (6) oder einer kleinen Steuerstabgruppe von bis zu etwa drei Steuerstäben bedingte Änderung der Neutronenflußdichte im Kern innerhalb zulässiger Grenzen bleibt, **dadurch gekennzeichnet,** daß Mittel zum Vergleich der Öffnungszeit der jeweiligen Hebeventilanordnung (H; H1, H2, H10) mit einer Sollöffnungszeit, die zum Erreichen des gewünschten Steuerstabhebeschritts erforderlich ist, vorgesehen sind, und daß hierzu der Istwert der Zeitspanne ($t_{a-z}$), welche zwischen dem Signal "Hebeventil offen" und "Hebeventil zu" vergeht, verglichen wird mit einem Grenzwert ($\Delta t_l$) einer Soll-öffnungszeitspanne und daß bei Überschreiten der Soll-Öffnungszeitspanne um einer vorgegebenen Anteil $k \cdot (\Delta t_l)$, wobei $0 < k < 1$, das zugehörige Senkventil (SV) geöffnet wird.

4. Steuerstabantrieb nach Anspruch 3, **dadurch gekennzeichnet,** daß $0,3 < k < 1$.

5. Steuerstabantrieb nach einem der Ansprüche 1 bis 4, insbesondere für Heizreaktoren oder schwerwassermoderierte Druckwasserreaktoren kleinerer Leistung bis zu etwa 10 MW$_{th}$, **dadurch gekennzeichnet,** daß im jeweils wirksamen Hebezweig (B, $B_i$) eine Hebeventilanordnung (H), bestehend aus wenigstens zwei zueinander in Reihe geschalteten Hebeventilen, einem Vorschalt-Hebeventil (H1, H10) und einem Nachschalt-Hebeventil (H2), vorgesehen ist, so daß beim Festsitzen des einen Hebeventils (H1, H2 bzw. H10, H2) in der Offenstellung die Unterbrechung des Hebe-Fluidstromes durch das andere Hebeventil (H2, H1 bzw. H2, H10) erfolgt und umgekehrt (FIG 5, FIG 6).

6. Steuerstabantrieb nach Anspruch 5, **dadurch gekennzeichnet,** daß das Vorschalt-Hebeventil ein den Hebezweigen (A) einer Mehrzahl von Steuerstabantrieben und ihren zugehörigen Hebeventilen (H2) gemeinsam vorgeschaltetes Haupt-Hebeventil (H10) mit zugehöriger Fluiddrossel (b10) ist (FIG 6).

7. Steuerstabantrieb nach Anspruch 1, 5 oder 6, mit mindestens zwei pro wirksamem Hebezweig in Reihe zueinander geschalteten Hebeventilen, einem Vorschalt- und einem Nachschalt-Hebeventil (H1, H10; H2), welche zur Ausführung eines Hebeschrittes des zugehörigen Steuerstabes beide geöffnet sind und von denen zur Beendigung des Hebeschrittes wenigstens eines in seine Schließstellung bringbar ist, wobei im Falle des Klemmens eines der beiden Hebeventile in der Offenstellung das normalerweise intakte andere Hebeventil schließt, **dadurch gekennzeichnet,** daß einem der beiden Hebeventile (H1, H10; H2) ein Wirbelkammerventil (W01) nachgeschaltet ist, mit drei hydraulischen Anschlüssen ($s_0$, $c_0$, $e_0$) für Versorgungs-, Steuer- und Auslaßstrom (f1, f2, f3), wobei der interne, steuerbare Strompfad ($s_0$ - $e_0$) des Wirbelkammerventils (W01), der zwischen seinem Versorgungsstrom-Einlaß ($s_0$) und seinem Ventil-Auslaß ($e_0$) liegt, im Hebezweig (B) angeordnet ist, und mit Reduzierbarkeit des Auslaßstromes (f3) auf einen solchen Bruchteil seines der Offenstellung entsprechenden Wertes ($f3_{max}$) durch Anlegen eines Steuerstromes (f2), daß durch den so reduzierten Fluidstrom ($f3_{min}$) im Hebezweig (B) der Hebevorgang der Steuerstäbe (6) unterbrochen wird; daß dem Steuerstrom-Einlaß ($c_0$) des Wirbelkammerventils (W01) über eine hydraulische Steuerleitung (C) der hydraulische Steuerstrom (f2) zuführbar ist, wobei der Steuerdruck des Steuerstromes (f2) um etwa 5 bis 10 % höher ist als der Versorgungsdruck des Versorgungsstromes (f1), und daß die Zeitkonstante $\Delta\tau$ des Wirbelkammerventils (W01), d.h. die Zeitspanne, die bei zum Zeitpunkt $\Delta\tau = 0$ eingeschaltetem Steuer- und Versorgungsstrom (f2, f1) bis zur Absperrung des Versorgungsstromes (f1) vergeht, auf die Soll-Öffnungszeitspanne ($\Delta t_1$) der Hebeventile, die zur Ausführung eines gewünschten maximal zulässigen Hebeschrittes des betreffenden Steuerstabes erforderlich ist, abgestimmt ist, so daß im Falle des Klemmens beider Hebeventile (H10, H1; H2) in ihrer Offenstellung nach oder kurz nach Erreichen der Soll-Öffnungszeitspanne ($\Delta t_1$) durch Reduzierung des Auslaßstromes (f3) des Wirbelkammerventils (W01) auf seinen abgedrosselten Wert $f3_{min}$ der Hebezweig (B) im Sinne einer Unterbrechung des Hebevorganges hydraulisch selbsttätig abgedrosselt ist (FIG 7).

8. Steuerstabantrieb nach Anspruch 7, **dadurch gekennzeichnet,** daß der interne, steuerbare Strompfad ($s_0$ - $c_0$) des Wirbelkammerventils (W01) im Hebezweig (B; $B_I$; $B_{II}$) zwischen dem Ausgang eines Vorschalt-Hebeventils (H10, H1) und dem Eingang eines Nachschalt-Hebeventils (H2) liegt.

9. Steuerstabantrieb nach Anspruch 1, **dadurch gekennzeichnet,** daß mindestens zwei zueinander parallel geschaltete, jede für den vollen Fluidstrom von 100 % ausgelegte Fluidpumpen (12A, 12B) der Fluidpumpenanordnung (12) vorgesehen sind (FIG 2).

10. Hydraulischer Steuerstabantrieb nach Anspruch 1, - wobei der jeweilige Hebezweig der Steuerventilanordnung eine Reihenschaltung aus wenigstens zwei Hebeventilen aufweist, einem Vorschalt-Hebeventil (H10) und einem Nachschalt-Hebeventil (H2), und an diese Reihenschaltung wenigstens ein Wirbelkammer-Ventil angeschlossen ist, welches den Fluidstrom im jeweiligen Hebezweig, welcher während einer Soll-Öffnungszeitspanne der Hebeventile dem angesteuerten Kolben-Zylindersystem zur Ausführung eines Hebeschrittes des zugehörigen Steuerstabes zugeführt wird, nach Überschreiten der Soll-Öffnungszeitspanne bzw. Klemmen wenigstens eines Hebeventils zumindest soweit reduziert, daß der Hebevorgang des Steuerstabes unterbrochen wird, wobei ferner das Wirbelkammerventil drei hydraulische Anschlüsse ($s_0$, $c_0$, $e_0$) für Versorgungs-, Steuer- und Auslaßstrom (f1, f2, f3) aufweist, **dadurch gekennzeichnet,** daß im Hebezweig (B) zumindest zwischen Vor- und Nachschalt-Hebeventil (H10 bzw. H2) ein Wirbelkammerventil (W10) mit seiner Versorgungsleitung (s) angeschlossen ist, dessen Auslaßleitung (e) in den Ablauf mündet und dessen Steuerleitung (c) an den Hebezweig (B) stromaufwärts des Vorschalt-Hebeventils (H10) über wenigstens eine Fluiddrossel zur Erzeugung eines hydraulischen Druckniveaus ($p_c$) angeschlossen ist, welches Druckniveau bei geschlossenem Vorschalt-Hebeventil (H10) größer ist als das Druckniveau ($p_s$) in der Versorgungsleitung (s) und somit eine sperrende Drallströmumg im Wirbelkammerventil aufrechterhält, dagegen bei geöffnetem Vorschalt-Hebeventil (H10) kleiner ist als das Druckniveau ($p_s$) in der Versorgungsleitung (s), so daß nach Ablauf einer der Zeitkonstanten ( $\Delta\tau$ ) des Wirbelkammerventils (W10) entsprechenden Zeitspanne ($\Delta t_2$), welche etwas größer ist als die Soll-Öffnungszeitspanne ($\Delta t_1$) der Hebeventile (H10; H2), zur Ausführung eines gewünschten, maximal zulässigen Hebeschrittes, die Sperrwirkung des Steuerstromes (f2) durch den Versorgungsstrom (f1) aufgehoben und der größte Teil des Fluidstromes im Hebezweig als Versorgungsstrom über das geöffnete Wirbelkammerventil im Sinne einer Unterbrechung des Hebevorganges in den Ablauf abgesteuert wird (FIG 10, FIG 11).

11. Hydraulischer Steuerstabantrieb nach Anspruch 1, - wobei der jeweils einschaltbare Hebezweig ($B_i$) mit seiner Hebeventilanordnung (H) eine Reihenschaltung aus wenigstens zwei Hebeventilen aufweist, **dadurch gekennzeichnet,** daß eines der wenigstens zwei Hebeventile der Hebeventilanordnung (H) eine Wirbeldrossel (W100) ist, mit - einem eine zylindrische Wirbelkammer (21') umgebenden Gehäuse (21), - einer über eine tangentiale Düse (Co1) in die Wirbelkammer einmündenden, an eine Gehäuseumfangswand (21.3) angeschlossenen Steuerstromleitung (c) - und einer über eine axiale Düse mit der Wirbelkammer kommunizierenden an eine Gehäusestirnwand

angeschlossenen Auslaßleitung (e), wobei dann, wenn das andere (H2) der wenigstens zwei Hebeventile (W100, H2) öffnet, die von der Pumpendruckleitung (12.1, 12.1a) gespeiste Fluidströmung mit einem internen Druckgefälle ($p_c$ - $p_e$) > 0 von der tangentialen Düse der Steuerstromleitung (c) zur radialen Düse der Auslaßleitung (e) und mit einem ersten Fließwiderstand ($Z_1$) der Wirbeldrossel sich ausbildet, und wobei innerhalb einer Zeitspanne ($\Delta t_2$) durch den in der Wirbelkammer sich aufbauenden Strömungswirbel der Fließwiderstand sich auf den Wert ($Z_2$) vergrößert, wobei ($Z_2$) > ($Z_1$) und wobei die Zeitspanne ($\Delta t_2$) etwas größer ist als die Sollöffnungszeitspanne ($\Delta t_1$) des anderen Hebeventils (H2), so daß nach Durchführung des Soll-Hebeschrittes des angesteuerten Steuerstabes und bei Klemmen des anderen (H2) der wenigstens zwei Hebeventile (W100, H2) in seiner Offenstellung aufgrund des erhöhten Fließwiderstandes ($Z_2$) der Fluidmengestrom durch die Wirbeldrossel (W100) reduziert und ein weiteres Ausfahren bzw. Heben des angesteuerten Steuerstabes verhindert ist (FIG 12, FIG 13).

12. Hydraulischer Steuerstabantrieb nach Anspruch 11, **dadurch gekennzeichnet,** daß eine Wirbeldrossel (W100) einer Mehrzahl von Steuerzweiganordnungen ($CV_i$) und dementsprechend einer Mehrzahl von Teil-Hebezweigen ($B_i$) gemeinsam ist, wobei die Wirbeldrossel (W100) als Vorschalt-Wirbeldrossel geschaltet ist und je ein nachgeschaltetes Hebeventil (H2) in den jeweiligen parallel zueinander liegenden Teil-Hebezweigen ($B_i$) mit der Wirbeldrossel (W100) eine redundante Reihenschaltung aus zwei Hebeventilen bildet.

13. Hydraulischer Steuerstabantrieb nach Anspruch 11 oder 12, **dadurch gekennzeichnet,** daß an die Gehäusestirnwand (21.1) der Wirbeldrossel (W100), welche der axialen Düse ($e_{01}$) der Auslaßleitung (e) gegenüberliegt, eine weitere Auslaßleitung (e1) geringeren Querschnitts angeschlossen ist, welche als Entlüftungsleitung und zur Abführung von Expansionswasser dient und welche mit ihrem anderen Ende mit einem hydraulischen Ablauf (D) kommuniziert.

**Claims**

1. Hydraulic control rod drive (CD) for water-cooled nuclear reactors, in particular heating reactors,
- having a reactor pressure vessel (1),
- having a reactor core (5) mounted therein, consisting of a fuel element field (5.0) in a vertical arrangement, and control rods (6) mounted so that they can be inserted into or retracted from interspaces within or between the fuel elements (5.1, 5.2), as well as a supporting structure for fuel elements and control rods and drives thereof,
- the control rods (6) being capable of being retracted against the force of gravity and inserted in the direction of the force of gravity, and driving bars (6.2) of the control rods (6) being provided with hydraulic piston/cylinder systems to which the cooling water can be fed as a working fluid from below by way of fluid lines (10) inside the reactor, the cooling water reservoir (KW) serving as a hydraulic drain,
- having a fluid pump arrangement (12) which is connected, by way of pressure lines and suction lines (12.1, 12.2) and line ducts (14, 15) associated thereto, on the pressure side to the piston/cylinder systems and on the suction side to the cooling water reservoir (KW) in the reactor pressure vessel (1),
- and having a control valve arrangement (11) arranged outside on the reactor pressure vessel (1) for influencing the amount of fluid on the pressure side of the fluid pump (12) for the purpose of control of the control rods (6) in the "raising" or "lowering" direction, but also for holding the respective control rod position, characterised in that the control valve arrangement (11) for each control rod (6) which is to be actuated has the following control branches:
- a holding branch (A) communicating on the input side with the pressure line (12.1a) and on the output side with the pressure side of the piston/cylinder system, with a first fluid throttle (a1) and a bypass fluid throttle (a2) connected upstream of this first fluid throttle and opening into the drain, the throttle crosssection of the first fluid throttle (a1) and the bypass fluid throttle (a2) being dimensioned so that, when the fluid pump (12A and 12B respectively) is running, they allow a flow of fluid through which is sufficient to hold the control rod (6) in question in its respective position,
- a raising branch (B) with the series connection of a raising valve arrangement (H) and a second fluid throttle (b1), which raising branch (B) is connected at its two branch ends, before and after the first fluid throttle (a1), to the holding branch (A),
- and a lowering branch (C) with the series connection of a lowering valve (SV) and a third fluid throttle (c1), which lowering branch (C) is connected at one of its ends, downstream of the first fluid throttle (a1), to the holding branch (A), and which opens into the cooling water reservoir (KW) at its other end,
- means being provided, when a raising valve in one of the raising branches (B, $B_I$, $B_{II}$) sticks in its open position, for automatically opening the lowering valve (SV) in the associated lowering branch (C), and/or forming the respective active raising valve arrangement (H) consisting of at least two raising valves (H1, H2; H10, H2; H10, WO1, H2; W100, H2) connected together in series, thus reducing the flow of fluid through the raising branch (B, $B_I$, $B_{II}$) which is interrupted in each case, at least sufficiently to prevent the further lifting of the actuated control rod.

2. Control rod drive according to claim 1, characterised in that the raising valve arrangement (H; H1, H2, H10) and, if necessary, the lowering valves (SV) are equipped with position indicators which deliver monitoring signals, available to the control room.

3. Control rod drive according to claim 2, in particular for heating reactors or heavy-watermoderated pressurised-water reactors of larger capacity from approximately 10 MW$_{th}$, in which the change in the neutron flux density in the core, caused by the undesired retraction of a control rod (6) or a small group of up to approximately three control rods, remains within permissible limits, characterised in that means are provided for comparing the time open of the respective raising valve arrangement (H; H1, H2, H10) with a set time open required for obtaining the desired control rod raising step, and in that, for this, the actual value of the period of time ($t_{a-z}$) which passes between the signal "raising valve open" and "raising valve closed" is compared with a limit value ($\Delta t_1$) of a set period of time open, and in that, when the set period of time open is exceeded by a specified portion k . ($\Delta t_1$), in which $0 < k < 1$, the associated lowering valve (SV) is opened.

4. Control rod drive according to claim 3, characterised in that $0.3 < k < 1$.

5. Control rod drive according to one of claims 1 to 4, in particular for heating reactors or heavywater-moderated pressurised-water reactors of lower capacity, up to approximately 10 MW$_{th}$, characterised in that, in the respective active raising branch (B, B$_i$), a raising valve arrangement (H) is provided which consists of at least two raising valves connected together in series, a primary raising valve (H1, H10) and a secondary raising valve (H2), so that, when the one raising valve (H1, H2 or H10, H2) sticks in the open position, interruption in the flow of the fluid for raising takes place by means of the other raising valve (H2, H1 or H2, H10), and the other way round (Figure 5, Figure 6).

6. Control rod drive according to claim 5, characterised in that the primary raising valve is a main raising valve (H10) with an associated fluid throttle (b10), which main raising valve (H10) is jointly connected in front of the raising branches (A) of a multiplicity of control rod drives and their associated raising valves (H2) (Figure 6).

7. Control rod drive according to claim 1, 5 or 6, having at least two raising valves per active raising branch, which raising valves are connected together in series, a primary and a secondary raising valve (H1, H10; H2), both of which are opened for carrying out a raising step of the associated control rod, and at least one of which can be brought into its closed position for ending the raising step, with, in the case of one of the two raising valves sticking in the open position, the normally intact other raising valve closing, characterised in that a vortex chamber valve (WO1) is connected after the two raising valves (H1, H10; H2) , with three hydraulic connections ($s_0$, $c_0$, $e_0$) for the supply, control and discharge flows (f1, f2, f3) , with the internal, controllable flow path ($s_0$ - $e_0$) of the vortex chamber valve (WO1), which flow path ($s_0$ - $e_0$) lies between its supply flow inlet ($s_0$) and its valve outlet ($e_0$), being arranged in the raising branch (B), and with the capability of reducing the discharge flow (f3) to a fraction of its value (f3$_{max}$) corresponding to the open position, by setting up a control flow (f2), this fraction being such that the raising process of the control rods. (6) is interrupted by this reduction in the flow of fluid (f3$_{min}$) in the raising branch (B); in that the hydraulic control flow (f2) can be fed to the control flow inlet ($c_0$) of the vortex chamber valve (WO1) by way of a hydraulic control line (C), the control pressure of the control flow (f2) being approximately 5 to 10 % higher than the supply pressure of the supply flow (f1), and in that the time constant $\Delta t$ of the vortex chamber valve (WO1), that is to say, the period of time which, when the control and supply current (f2, f1) are connected at time $\Delta \tau$ = 0, passes until the supply current (f1) is blocked, is matched to the set period of time open ($\Delta t_1$) of the raising valves, which period of time is necessary for carrying out a desired maximum permissible raising step of the control rod in question, so that, in the case of both raising valves (H10, H1; H2) sticking in their open position after or shortly after the set time open ($\Delta t_1$) is reached, the raising branch (B) is automatically hydraulically throttled, in the sense of an interruption in the raising process, by a reduction in the discharge flow (f3) of the vortex chamber valve (WO1 ) to its throttled value f3$_{min}$ (Figure 7).

8. Control rod drive according to claim 7, characterised in that the internal, controllable flow path ($s_0$ - $c_0$) of the vortex chamber valve (WO1) lies in the raising branch (B; B$_I$; B$_{II}$), between the exit of a primary raising valve (H10, H1) and the entrance of a secondary raising valve (H2).

9. Control rod drive according to claim 1, characterised in that at least two fluid pumps (12A, 12B) are provided for the fluid pump arrangement (12), which fluid pumps (12A, 12B) are connected together in parallel, and each of which is designed for the full 100 % flow of fluid (Figure 2).

10. Hydraulic control rod drive according to claim 1,

- the respective raising branch of the control valve arrangement having a series connection consisting of at least two raising valves, a primary raising valve (H10) and a secondary raising valve (H2), and at least one vortex chamber valve being attached to this series connection, which vortex chamber valve, after the set period of time open, or the sticking, of at least one raising valve, reduces, in the respective raising branch, the flow of fluid which is fed to the actuated piston/cylinder system during a set period of time open of the raising valves, for carrying out a raising step of the associated control rod, the said vortex chamber valve reducing this flow of fluid at least far enough so that the raising process of the control rod is interrupted, the vortex chamber valve further having three hydraulic connections ($s_0$, $c_0$, $e_0$) for the supply, control and discharge flows (f1, f2, f3), characterised in that, in the raising branch (B), at least between the primary and secondary valves (H10 and H2 respectively), a vortex chamber valve (W10) is connected with its supply line (s), the discharge line (e) of which vortex chamber valve opens into the drain, and the control line (c) of which vortex chamber valve is connected to the raising branch (B) upstream of the primary raising valve (H10) by way of at least one fluid throttle, for producing a hydraulic pressure level ($p_c$) which, when the primary raising valve (H10) is closed, is higher than the pressure level ($p_s$) in the supply line (s), and consequently maintains a blocking, rotational flow in the vortex chamber valve, and which, when on the other hand the primary raising valve (H10) is open, is lower than the pressure level ($p_s$) in the supply line (s), so that, after a period of time ($\Delta t_2$) has passed corresponding to the time constants ($\Delta \tau$) of the vortex chamber valve (W10), which period of time is approximately greater than the set period of time open ($\Delta t_1$) of the raising valves (H10; H2), for carrying out a desired maximum admissible raising step, the blocking effect of the control flow (f2) is lifted by the supply flow (f1), and the greater part of the flow of fluid in the raising branch is diverted into the drain as a supply flow by way of the open vortex chamber valve in the sense of an interruption in the raising process (Figure 10, Figure 11).

11. Hydraulic control rod drive according to claim 1,
- with the respectively connected raising branch ($B_i$), together with its raising valve arrangement (H), having a series connection consisting of at least two raising valves, characterised in that one of the raising valves, of which there are at least two, of the raising valve arrangement (H) is a vortex throttle (W100), having:
- a housing (21) surrounding a cylindrical vortex chamber (21'),
- a control flow line (c) opening by way of a tangential nozzle (co1) into the vortex chamber and attached to a peripheral wall (21.3) of the housing,
- and a discharge line (e) in communication, by way of an axial nozzle, with the vortex chamber and connected to a front wall of the housing, wherein the flow of fluid, which is fed by the pump pressure line (12.1, 12.1a), and which has an internal pressure difference ($p_c - p_e$) > 0 between the tangential nozzle of the control flow line (c) and the radial nozzle of the discharge line (e), and which has a first flow-resistance ($Z_1$) of the vortex throttle, develops when the other (H2) of the raising valves (W100, H2), of which there are at least two, opens; and wherein the flow-resistance increases to the value ($Z_2$), within a period of time ($\Delta t_2$), due to the flow vortex forming in the vortex chamber, with ($Z_2$) > ($Z_1$) and with the period of time ($\Delta t_2$) being approximately greater than the set period of time open ($\Delta t_1$) of the other raising valve (H2), so that, after the set raising step of the actuated control rod has been carried out and when the other one (H2) of the raising valves (W100, H2), of which there are at least two, sticks in its open position, the flow of the amount of fluid through the vortex throttle (W100) is reduced because of the increased flow-resistance ($Z_2$), and a further retraction or raising of the actuated control rod is prevented (Figure 12, Figure 13).

12. Hydraulic control rod drive according to claim 11, characterised in that a vortex throttle (W100) cooperates with a multiplicity of control branch arrangements ($CV_i$) and, correspondingly, a multiplicity of partial raising branches ($B_i$), the vortex throttle (W100) being connected as a primary vortex throttle, and a downstream raising valve (H2) in each case forming, with the vortex throttle (W100), in each of the partial raising branches ($B_i$), which lie parallel to each other, a redundant series connection comprising two raising valves.

13. Hydraulic control rod drive according to claim 11 or 12, characterised in that, attached to the housing front wall (21.1) of the vortex throttle (W100), which lies opposite the axial nozzle ($e_{01}$) of the discharge line (e), there is a further discharge line (e1) with a smaller cross-section, which serves as a vent line and to carry away expansion water, and which is in communication at its other end with a hydraulic drain (D).

## Revendications

1. Dispositif d'entraînement hydraulique (CD) des barres de commande pour des réacteurs nucléaires refroidis par eau, notamment des réacteurs thermiques,
- comportant un caisson sous pression (1) du réacteur,
- un coeur (5) du réacteur, disposé à l'intérieur de ce caisson et constitué par un assemblage combustible (5.0) disposé verticalement et des barres de commande (6) pouvant être introduites dans des espaces et enlevées des espaces intercalaires situés à l'intérieur des ou entre les éléments combustibles (5.1, 5.2), ainsi qu'une structure de support pour les éléments combustibles et les barres de commande et leurs dispositifs d'entraînement,
- les barres de commande (6) pouvant être dégagées à l'encontre de la force de pesanteur et introduites dans la direction de la force de pesanteur, et des tiges (6.2) d'entraînement des barres de commande (6) étant pourvues de systèmes hydrauliques à piston et cylindre, auxquels l'eau de refroidissement peut être envoyée, par le bas, en tant que fluide de travail, par l'intermédiaire de canalisations pour le fluide (10) internes au réacteur, le réservoir d'eau de refroidissement (KW) étant utilisé comme système d'évacuation hydraulique,
- un dispositif à pompes fluidiques (12), qui est relié, par l'intermédiaire de canalisations de refoulement et d'aspiration (12.1, 12.2) et de passages associés (14.4) pour ces canalisations, côté pression aux systèmes à piston et cylindre et côté aspiration au réservoir d'eau de refroidissement (KW) dans le caisson sous pression (1) du réacteur, et
- un dispositif (11) à vannes de commande, disposé à l'extérieur du caisson sous pression (1) du réacteur, pour influer sur la quantité de fluide sur le côté refoulement de la pompe fluidique (12) en vue de déplacer les barres de commande (6) dans la direction "soulèvement" ou "abaissement" ou bien pour maintenir les barres de commande dans la position qu'elles occupent, caractérisé par le fait que le dispositif (11) à vanne de commande comporte, pour chaque barre de commande (6) devant être actionnée, les circuits de commande suivants :
- un circuit de maintien (A), qui communique côté entrée avec la canalisation de refoulement (12.1a) et côté sortie avec le côté refoulement du système à piston et cylindre, et comporte un premier étranglement fluidique (a1) et un étranglement fluidique de dérivation (a2), qui est raccordé en aval, du point de vue gradient, de ce premier étranglement fluidique et débouche dans le système d'évacuation, les sections transversales d'étranglement du premier étranglement (a) et de l'étranglement fluidique de dérivation (a2) étant dimensionnées de manière que, lorsque la pompe fluidique (12A ou 12B) fonctionne, les étranglements laissent passer un écoulement de fluide qui suffit pour maintenir la barre de commande respective (6) dans sa position respective,
- un circuit de soulèvement (B) incluant le circuit série formé d'un dispositif à vannes de soulèvement (H) et d'un second étranglement fluidique (b1), qui est raccordé, par ses deux extrémités, en amont et en aval du premier étranglement fluidique (a1), au circuit de maintien (A), et
- un circuit d'abaissement (C) incluant le montage en série d'une vanne d'abaissement (SV) et d'un troisième étranglement fluidique (c1), qui est raccordé par l'une de ses extrémités, sur le côté aval, du point de vue du gradient, du premier étranglement fluidique (a1), au circuit de maintien (A) et débouche, par son autre extrémité, dans le réservoir d'eau de refroidissement (KW),
- des moyens étant prévus pour ouvrir automatiquement la vanne d'abaissement (SV) située dans le circuit d'abaissement associé (C), lors du blocage de la vanne de soulèvement située dans l'un des circuits de soulèvement (B, B_I, B_II) dans sa position ouverte, et/ou pour réaliser le dispositif à vannes de soulèvement (H) respectivement actif avec au moins deux vannes de soulèvement (H1, H2; H10, H2; H10, WO1, H2; W100, H2) branchées en série et réduire l'écoulement du fluide dans le circuit de soulèvement (B, B_I,B_II) respectivement perturbé, au moins pour que la poursuite du soulèvement de la barre de commande commandée soit empêché.

2. Dispositif d'entraînement de barres de commande suivant la revendication 1, caractérisé par le fait que le dispositif à vannes de soulèvement (H; H1, H2, H10) et éventuellement les vannes d'abaissement (SV) sont équipés d'indicateurs de position qui envoient des signaux de contrôle disponibles dans le poste de contrôle.

3. Dispositif d'entraînement de barres de commande suivant la revendication 2, notamment pour des réacteurs thermiques ou des réacteurs à eau sous pression, modérés par de l'eau lourde et possédant une puissance supérieure à partir d'environ 10 MW_th, dans lesquels la modification de la densité de flux neutronique dans le noyau, qui est due à la sortie indésirable d'une barre de commande (6) ou d'un petit groupe de barres de commande contenant jusqu'à environ trois barres de commande, reste à l'intérieur de limites admissibles, caractérisé par le fait qu'il est prévu des moyens pour comparer la durée d'ouverture du dispositif de vannes de soulèvement (H; H1, H2, H10) à une durée d'ouverture de consigne nécessaire pour l'obtention du pas désiré d'abaissement des barres de commande, et qu'à cet effet la valeur réelle de l'intervalle de temps (t_{a-z}), qui s'écoule entre le signal "ouverture de la vanne de soulèvement" et le signal "fermeture de la vanne de soulèvement", est comparée à une valeur limite (Δt_l) d'un intervalle de temps d'ouverture de consigne, et que, lors du dépassement de l'intervalle de temps d'ouverture de consigne, d'une fraction prédéterminée k . (Δt_l), avec O < k < 1, la vanne d'abaissement associée (SV) est ouverte.

4. Dispositif d'entraînement de barres de commande suivant la revendication 1, caractérisé par le fait que l'on a 0,3 < k < 1.

5. Dispositif d'entraînement des barres de commande suivant l'une des revendications 1 à 4, notamment pour des réacteurs thermiques ou des réacteurs à eau sous pression modérés par de l'eau lourde et possédant une puissance assez faible atteignant jusqu'à environ 10 MW_th, caractérisé par le fait que dans le circuit de soulèvement (B, Bi) respectivement actif, il est prévu un dispositif à vannes de soulèvement (H), constitué par au moins deux vannes de soulèvement branchées en série, à savoir une vanne de soulèvement amont (H1, H10) et une vanne de soulèvement aval (H2), de sorte que, lors du blocage d'une vanne de soulèvement (H1, H2 ou H10, H2) dans la position ouverte, l'interruption de l'écoulement du fluide de soulèvement est réalisée par l'autre vanne de soulèvement (H2, H1 ou H2, H10) et inversement (figure 5, figure 6).

6. Dispositif d'entraînement de barres de commande suivant la revendication 5, caractérisé en ce que le dispositif de soulèvement amont est une vanne principale de soulèvement (H10), qui est branchée en amont des circuits de soulèvement (A) d'une multiplicité de dispositifs d'entraînement de barres de commande et de leurs vannes de soulèvement associées (H2) et à laquelle est associé un étranglement fluidique (b10) (figure 6).

7. Dispositif d'entraînement de barres de commande suivant la revendication 1, 5 ou 6, comportant au moins deux vannes de soulèvement branchées en série pour chaque circuit actif de soulèvement, à savoir une vanne de soulèvement amont et une vanne de soulèvement aval (H1, H10; H2), qui sont toutes deux ouvertes pour l'exécution d'un pas de soulèvement de la barre de commande associée et dont l'une au moins peut être amenée dans sa position de fermeture pour arrêter le pas de soulèvement, auquel cas, lorsque l'une des deux vannes de soulèvement est bloquée dans la position ouverte, l'autre vanne de soulèvement normalement intacte réalise la fermeture, caractérisé par le fait qu'en aval de l'une des deux vannes de soulèvement (H1, H10; H2) est branchée une vanne en forme chambre de tourbillonnement (WO1), et qu'il est prévu trois raccords hydrauliques (s_o, c_o, e_o) pour les écoulements d'alimentation, de commande et de sortie (f1, f2, f3), le circuit interne commandable d'écoulement (so-eo) de la vanne (WO1) en forme de chambre de tourbillonnement, qui est située entre l'entrée (s_o) de l'écoulement d'alimentation de cette chambre et sa sortie (e_o), est disposée dans le circuit de soulèvement (B), et que l'écoulement de sortie (f3) peut être réduit à une fraction telle de sa valeur (f3_max) correspondant à la position d'ouverture, par application d'un écoulement de commande (f2), que le processus de soulèvement des barres de commande (6) est interrompu par l'écoulement de fluide (f3_min) ainsi réduit, dans le circuit de soulèvement (B); que l'écoulement hydraulique de commande (f2) peut être envoyé à l'entrée (c_o) de l'écoulement de commande de la vanne (WO1) en forme de chambre de tourbillonnement par l'intermédiaire de la canalisation de commande hydraulique (C), la pression de commande de l'écoulement de commande (f2) étant supérieure d'environ 5 à 10 % à la pression d'alimentation de l'écoulement d'alimentation (f1), et que l'intervalle de temps, qui s'écoule depuis l'instant $\Delta t = 0$ du déclenchement des écoulements de commande et d'alimentation (f2, f1) jusqu'à l'interruption de l'écoulement d'alimentation (f1), est réglé sur l'intervalle de temps d'ouverture de consigne ($\Delta t_l$) des vannes de soulèvement, qui est nécessaire pour l'exécution d'un pas maximal admissible désiré de soulèvement de la barre de commande considérée, de sorte que dans le cas du blocage des deux vannes de soulèvement (H10, H1; H2) dans leur position ouverte après ou peu après que l'intervalle de temps d'ouverture de consigne ($\Delta t_l$) a été atteint, le circuit de soulèvement (B) est étranglé de façon automatique au moyen d'une réduction de l'écoulement de sortie (f3) de la vanne (WO1) en forme de chambre de tourbillonnement à sa valeur étranglée (f3_min), dans le sens d'une interruption de l'opération de soulèvement (figure 7).

8. Dispositif d'entraînement de barres de commande suivant la revendication 7, caractérisé par le fait que le circuit interne commandable d'ècoulement (s_o-c_o) de la vanne (WO1) en forme de chambre de tourbillonnement est situé dans le circuit de soulèvement (B; B_I; B_II) entre la sortie d'une vanne de soulèvement amont (H10, H1) et l'entrée d'une vanne de soulèvement aval (H2).

9. Dispositif d'entraînement de barres de commande suivant la revendication 1, caractérisé par le fait qu'il est prévu au moins deux pompes fluidiques (12A, 12B) du dispositif à pompes fluidiques (12), qui sont branchées en parallèle et sont conçues chacune pour la totalité de l'écoulement de fluide à 100 % (figure 2).

10. Dispositif hydraulique d'entraînement de barres de commande suivant la revendication 1,
- dans lequel le circuit respectif de soulèvement du dispositif à vanne de commande comporte un circuit série formé par au moins deux vannes de soulèvement, une vanne de soulèvement amont (H10) et une vanne de soulèvement aval (H2), et à ce circuit série est raccordée au moins une vanne en forme de chambre de tourbillonnement, qui, pendant un intervalle de temps d'ouverture de consigne des vannes de soulèvement, réduit, dans le circuit de soulèvement respectif, l'écoulement de fluide qui est envoyé au système à piston et cylindre commandé pour l'exécution d'un pas de soulèvement de la barre de commande associée, après le dépassement de l'intervalle de temps d'ouverture de consigne ou après le blocage d'au moins une vanne de soulèvement, au moins dans la mesure où l'opération de soulèvement de la barre de commande est interrompue, la vanne en forme de chambre de tourbillonnement comportant en outre trois raccords hydrauliques (s_o, c_o, e_o) pour les écoulements d'alimentation, de commande et de sortie (f1, f2, f3), caractérisé par le fait que dans le circuit de soulèvement (B), au moins entre les vannes de soulèvement amont et aval (H10 et H2), est branchée, par sa canalisation d'alimentation (s), une vanne (W10) en forme de chambre de tourbillonnement, dont la canalisation de sortie (e) débouche dans le système d'évacuation et dont la canalisation de commande (c) est raccordée au circuit de soulèvement (B), en amont de la soupape de soulèvement amont (H10), par l'intermédiaire d'au moins un étranglement fluidique pour la production d'un niveau de pression hydraulique (p_c), qui, lorsque la soupape de soulèvement amont (H10) est fermée, est supérieur au niveau de pression (p_s) régnant dans la canalisation d'alimentation (s) et par conséquent maintient un écoulement tourbillonnaire réalisant un blocage dans la vanne en forme de chambre de tourbillonnement, et qui, lorsque la vanne de soulèvement amont (H10) est ouverte, est inférieur au niveau de pression (p_s) régnant dans la canalisation d'alimentation (s), de sorte qu'après l'écoulement d'un intervalle de temps ($\Delta s_2$), qui correspond à la constante de temps ($\Delta t$) de la vanne (W10) en forme de chambre de tourbillonnement et est légèrement supérieur à l'intervalle de temps d'ouverture de consigne ($\Delta t_{s1}$) des vannes de soulèvement (H10; H2), pour l'exécution d'un pas maximal admissible de soulèvement, l'action de blocage de l'écoulement de commande (f2) est supprimé par l'écoulement d'alimentation (f1), et la majeure partie de l'écoulement de fluide situé dans le circuit de soulèvement est évacuée dans le système d'évacuation en tant que courant d'alimentation, par l'intermédiaire de la vanne en forme de chambre de tourbillon ouverte, dans le sens d'une interruption du processus de soulèvement (figure 10, figure 11).

11. Dispositif hydraulique d'entraînement de barres de commande suivant la revendication 1,
- dans lequel le circuit de soulèvement (Bi), qui peut être respectivement branché et est équipé de son dispositif à vannes de soulèvement (H), possède un circuit série formé par au moins deux vannes de soulèvement, caractérisé par le fait que l'une des vannes de soulèvement, prévues au moins au nombre de deux, du dispositif à vannes de soulèvement (H) est un dispositif d'étranglement à tourbillon (W100), comportant
- un carter (21) entourant une chambre cylindrique de tourbillonnement (21'),
- une canalisation (c) de l'écoulement de commande, qui débouche dans la chambre de tourbillonnement par l'intermédiaire d'une buse tangentielle ($c_{o1}$) et est raccordée à la paroi périphérique (21.3) du carter, et

- une canalisation de sortie (e) communiquant avec la chambre de tourbillonnement par l'intermédiaire d'une buse axiale et raccordée à une paroi frontale du carter, auquel cas, lorsque l'autre (H2) des vannes de soulèvement (W100, H2), prévues au moins au nombre de deux, s'ouvre, l'écoulement de fluide introduit par la canalisation (12.1, 12.1a) de refoulement de la pompe est réalisé avec un gradient interne de pression ($p_t$-$p_e$) > 0 depuis la buse tangentielle de la canalisation (c) de l'écoulement de commande en direction de la buse radiale de la canalisation de sortie (e) et avec une première résistance d'écoulement ($Z_1$) au niveau du dispositif d'étranglement à tourbillon, et au cours d'un intervalle de temps ($\Delta t_2$), la résistance d'écoulement est accrue à la valeur ($Z_2$) par le tourbillon d'écoulement qui s'établit dans la chambre de tourbillonnement, auquel cas on a ($Z_2$) > ($Z_1$) et l'intervalle de temps ($\Delta t_2$) est légèrement supérieur à l'intervalle de temps d'ouverture de consigne ($\Delta t_1$) de l'autre vanne de soulèvement (H2) de sorte qu'après l'exécution du pas de soulèvement de consigne de la barre de commande commandée et lors du blocage de l'autre (H2) des vannes de soulèvement (W100, H2), prévues au moins au nombre de deux, dans sa position ouverte en raison de la résistance d'écoulement accrue ($Z_2$), la quantité de fluide circulant à travers le dispositif d'étranglement à tourbillon (W100) est réduite et la poursuite de la sortie ou du soulèvement de la barre de commande commandée est empêchée (figure 12, figure 13).

12. Dispositif hydraulique d'entraînement de barres de commande suivant la revendication 11, caractérisé par le fait qu'un dispositif d'étranglement à tourbillon (W100) est commun à une multiplicité de dispositifs ($CV_i$) formant circuits de commande et par conséquent à une multiplicité de circuits partiels de soulèvement ($B_i$), le dispositif d'étranglement à tourbillon (W100) étant branché en tant que dispositif d'étranglement à tourbillon amont, tandis qu'une vanne de soulèvement aval respective (H2), située dans les circuits partiels de soulèvement ($B_i$) qui sont branchés respectivement en parallèle, forme, avec le dispositif d'étranglement à tourbillon (W100) un circuit série redondant formé de deux vannes de soulèvement.

13. Dispositif hydraulique d'entraînement de barres de commande suivant la revendication 11 ou 12, caractérisé par le fait qu'à la paroi frontale (21.1) du carter du dispositif d'étranglement à tourbillon (W100), qui est situé en visà-vis de la buse axiale ($e_{o1}$) de la canalisation de sortie (e), est raccordée une autre canalisation de sortie (e) possédant une section transversale réduite, qui sert de canalisation de désaération et d'évacuation de l'eau d'expansion et communique, par son autre extrémité, avec un système d'évacuation hydraulique (D).

FIG 1

FIG 2

FIG 3

FIG 5

FIG 4

FIG 6

EP 0 252 326 B1

FIG 7

FIG 8

FIG 9

FIG 10

EP 0 252 326 B1

A

AI  AII

a1

a1

H2

1.5  1

12.1  b10  H10  B  b2  BI  18.1  18.3  CV1  6.1  6.2  6  1

KW  12.2  12  17  22  19  H21  10.1  6.2  (KW)  20.1  D

a21

CI  CII

b2  18.2  10.2  6  6  1

BII  H22  CI  18.4  CV2  6.1  (KW)  20.2  D

c pc  f2  c  f1  ps

A10  23  co  S0  s

a22  W10  SV

e  eo

pe  CD1

1.5  e  f3

(KW)  1  SV

D  1

(KW)  1

D

FIG 11

EP 0 252 326 B1

EP 0 252 326 B1

FIG 12

FIG 13